# EUROPEAN PATENT APPLICATION

(11) **EP 3 992 941 A1**
(43) Date of publication of application: **04.05.2022**
(21) Application number: 20831486.4
(22) Date of filing: 26.06.2020
(51) Int. Cl.: G08G 1/0969, G08G 1/127, G01C 21/34, G06Q 50/30

(54) **INFORMATION PROCESSING DEVICE, INFORMATION PROCESSING METHOD AND PROGRAM**

(30) Priority: 28.06.2019 JP 2019122019
(71) Applicant: Nearme, Inc., Tokyo 104-0031 (JP)
(72) Inventor: TAKAHARA, Koichiro, Tokyo 104-0031 (JP); HOSODA, Kenji, Tokyo 104-0031 (JP)
(74) Representative: Müller Hoffmann & Partner
(86) International application number: PCT/JP2020/025390
(87) International publication number: WO 2020/262673

(57) **Abstract**

An information processing device includes a first acquisition unit, a second acquisition unit, and a creation unit. The first acquisition unit acquires first passenger information that includes a get-on point or a get-off point and a get-on time or a get-off time of a passenger who already has a reservation of use of a vehicle on which a plurality of passengers share a ride. The second acquisition unit acquires second passenger information that includes a get-on point or a get-off point and a get-on time or a get-off time of a new passenger who wishes to use the vehicle. The creation unit creates an operation plan based on the first and the second passenger information to provide a service route on which the passengers get on or get off.

## Description

### TECHNICAL FIELD

The present invention relates to an information processing device, an information processing method, and a program.

### BACKGROUND

On-demand bus service systems, which dynamically plan service routes for transportations such as buses in response to passengers' usage requests, have been proposed. For example, Patent Document 1 discloses an on-demand operation management system that creates an operation plan for a bus in response to users' requests for use, where the operation plan includes a mid point between a first stop, where a first user wishes to get on or off the bus, and a second stop, where a second user wishes to get on or off the bus, as a stop point.

### (RELATED ART)

[Patent Document 1] Japanese Patent No. 6273656 (JP6273656)

### SUMMARY

### (PROBLEMS TO BE SOLVED BY THE INVENTION)

Unfortunately, the invention according to Patent Document 1 creates an operation plan in which a bus is operated only within a tolerable range of a predetermined timetable for regular service routes, and cannot create an operation plan outside the tolerable range.

It is an object of an aspect of the present invention to provide an information processing device and the like that can suitably perform dynamic creation of an operation plan.

### (MEANS FOR SOLVING PROBLEMS)

A first aspect of the present invention is an information processing device. The information processing device includes a first acquisition unit, a second acquisition unit, and a creation unit. The first acquisition unit acquires first passenger information that includes a get-on point or a get-off point and a get-on time or a get-off time of a passenger who already has a reservation of use of a vehicle on which a plurality of passengers share a ride. The second acquisition unit acquires second passenger information that includes a get-on point or a get-off point and a get-on time or a get-off time of a new passenger who wishes to use the vehicle. The creation unit creates an operation plan based on the first passenger information and the second passenger information to provide a service route on which the passengers get on or get off.

### (EFFECTS OF THE INVENTION)

An aspect of the present invention can suitably perform a dynamic creation of an operation plan.

### BRIEF DESCRIPTION OF THE DRAWINGS

FIG 1 is a schematic view illustrating a configuration of an operation planning system.
FIG 2 is a block diagram illustrating a server configuration.
FIG 3 is a block diagram illustrating a terminal.
FIG. 4 is a view illustrating an example of a layout of records of a user DB, a bus DB, a driver DB, and an operation plan DB.
FIG. 5 is a view illustrating an example of a location-setting screen.
FIG. 6 is a view illustrating an example of a bus-reservation screen.
FIG. 7 is a view illustrating a process for creation of an operation plan.
FIG. 8A is a view illustrating an updating process of the operation plan.
FIG. 8B is a view illustrating an updating process of the operation plan.
FIG. 9 is a view illustrating an example of a reservation confirmation screen.
FIG. 10 is a view illustrating an example of a screen for checking operation status.
FIG. 11 is a flowchart for showing an example of a processing procedure executed by the server.
FIG. 12 is a flowchart for showing an example of a processing procedure executed by the terminal.
FIG. 13 is a view illustrating an overview of a second embodiment of the present invention.
FIG. 14 is a view illustrating an example of a screen for a list of the operation plans.
FIG. 15A is a view illustrating an example of a screen for displaying driver information.
FIG. 15B is a view illustrating an example of the screen for displaying the driver information.
FIG. 16 is a view illustrating an example of a displaying screen of a driver's terminal.
FIG. 17 is a flowchart for showing an example of a processing procedure executed by a company terminal.
FIG. 18 is a flowchart for showing an example of a processing procedure executed by the driver's terminal.

### DETAILED DESCRIPTION

Hereinafter, some embodiments of the present invention will be described with reference to the accompanying drawings.

### (First Embodiment)

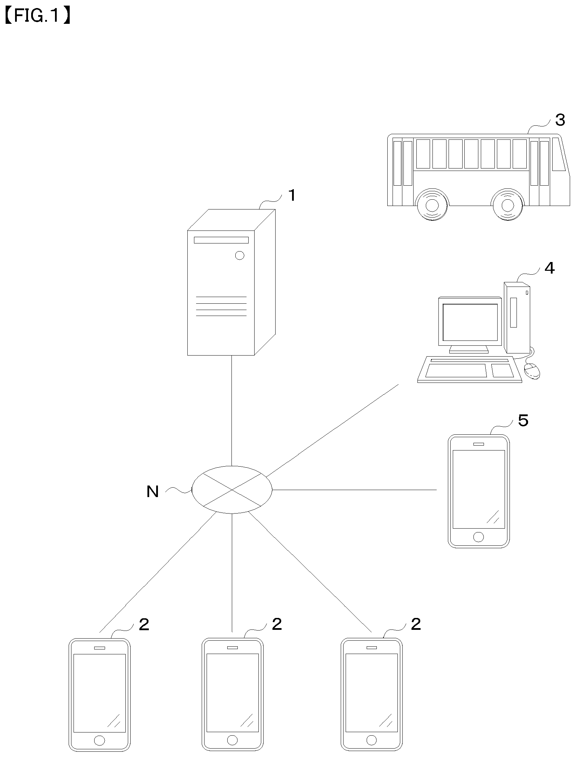

FIG. 1 is a schematic view illustrating a configuration of an operation planning system. In the present embodiment, the operation planning system that dynamically creates an operation plan for a vehicle (a bus) on which a plurality of passengers share a ride will be described. The operation planning system includes an information processing device 1, user terminals 2, a bus 3, a company terminal 4, and a driver's terminal 5. The devices are communicatively connected with each other via a network N such as the Internet. Although the present embodiment uses a bus as an example of a vehicle, a type of the vehicle is not limited to a bus, and may be any vehicles on which a plurality of passengers can ride, such as a passenger car or a shuttle bus.

The present embodiment creates the operation plan for the bus 3 running back and forth between a predetermined departure point and a destination point. The bus 3 may be a shuttle bus, for example, with a hotel as a departure point and an airport as a destination point. However, the departure point and the destination point are not limited in particular. In the present embodiment, the operation plan is created dynamically modifying a service route and a timetable, etc. of the bus 3 in response to a request for use of the bus 3 from a user who has been registered as a member of the present system.

The information processing device 1 is an information processing device such as a server device or a personal computer that can process and transmit various information. The information processing device 1 in the present embodiment shall be a server device, and will be rephrased hereinafter as a server 1 for simplification. The server 1 receives the request for use of the bus 3 from each user, creates the operation plan, and notifies the plan to a driver of the bus 3.

The user terminal 2 is a terminal device operated by the user (a passenger) using the present system, and is a mobile terminal such as a smartphone or a tablet terminal. The user terminal 2 includes an application program installed in advance for achieving functions pertaining to the present system. The user terminal 2 executes the application program for processes as will be described below. The server 1 receives the request for use from the user terminal 2 and creates the operation plan.

The bus 3 is a shuttle bus running between the departure point and the destination point as mentioned above, and is an on-demand bus driven by a driver who follows instructions from the server 1. The bus 3 is not limited to the vehicle (bus) called as on-demand bus, but may be any vehicles that operate following the instructions from the server 1. Also, although FIG. 1 shows only the one bus 3 for convenience of illustration, the system of the present embodiment creates the operation plans for the plurality of buses 3. The server 1, for example, communicates with a mobile terminal that the driver carries (the driver's terminal 5) etc., notifies the operation plan of the bus 3 to the driver, and continuously acquires and manages position information of the bus 3 (e.g., position coordinates from Global Positioning System (GPS)).

The company terminal 4 is a terminal device, such as a personal computer, of an operating company of the bus 3 (a bus company). The driver's terminal 5 is a mobile terminal, such as a smartphone or a tablet terminal, carried by the driver of the individual bus 3. To operate the bus 3, the server 1 notifies to the company terminal 4 and the driver's terminal 5, etc. of the operation plan created in response to the request of use from the user.

There may be a single or a plurality of operating companies that operate the bus(es) 3 in cooperation with the present system. Also, in cooperating with the driver of the bus 3, although the server 1 of the present embodiment communicates with the mobile driver's terminal 5, the server 1 may communicate with an onboard system mounted on the bus 3, for example, to notify the operation plan to the driver.

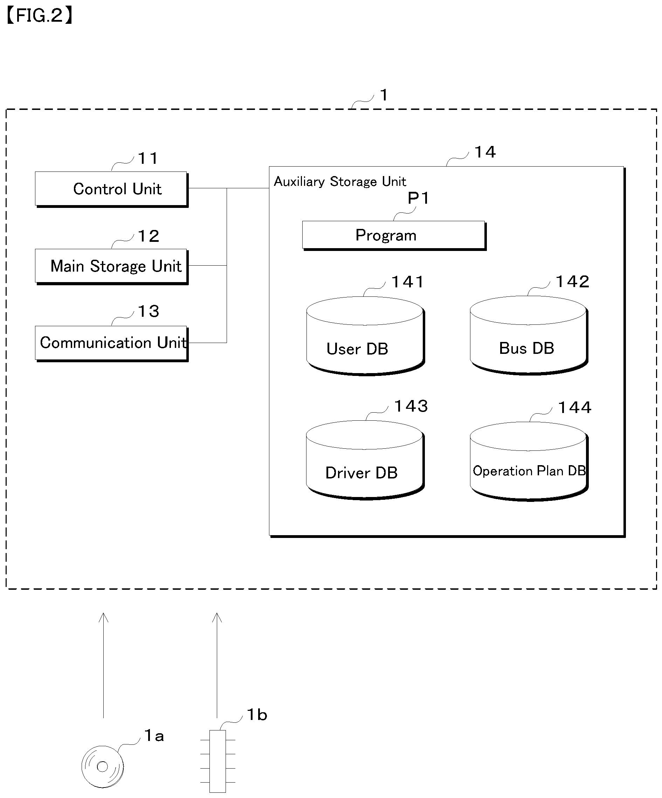

FIG. 2 is a block diagram illustrating a configuration of the server 1. The server 1 includes a control unit 11, a main storage unit 12, a communication unit 13, and an auxiliary storage unit 14. The control unit 11 includes one or more arithmetic devices such as a central processing unit (CPU), a micro-processing unit (MPU), and a graphics processing unit (GPU), and reads out and executes a program P1 stored in the auxiliary storage unit 14 to execute various information processing and control processing. The main storage unit 12 is a temporary storage space such as a static random access memory (SRAM), a dynamic random access memory (DRAM), or a flash memory, which temporary stores data necessary for the control unit 11 to execute arithmetic processing. The communication unit 13 is a communication module for execution of process associated with communication, and exchanges information with the outside.

The auxiliary storage unit 14 is a non-volatile memory space such as a large capacity memory or a hard disk, storing the program PI, which is necessary for the control unit 11 to execute processes, and other data. Also, the auxiliary storage unit 14 stores a user database (DB) 141, a bus DB 142, a driver DB 143, and an operation plan DB 144. The user DB 141 is a database storing information about the users. The bus DB 142 is a database storing information about the buses 3. The driver DB 143 is a database storing information about the drivers. The operation plan DB 144 is a database storing information associated with the operation plans of the buses 3.

The auxiliary storage unit 14 may be an external storage device connected to the server 1. Also, the server 1 may be a multi-computer formed of a plurality of computers, or may be a virtual machine configured virtually by software.

Also, in the present embodiment, the configuration of the server 1 is not limited to the above, and may include an input unit for receiving operational inputs and a display unit for displaying images, etc., for example. Also, the server 1 may include a reading unit for reading a portable storage media 1a, such as a CD (Compact Disc)-ROM or a DVD (Digital Versatile Disc)-ROM, and may read out the program P1 from the portable storage media 1a to execute the program P1. Alternatively, the server 1 may read out the program P1 from a semiconductor memory 1b.

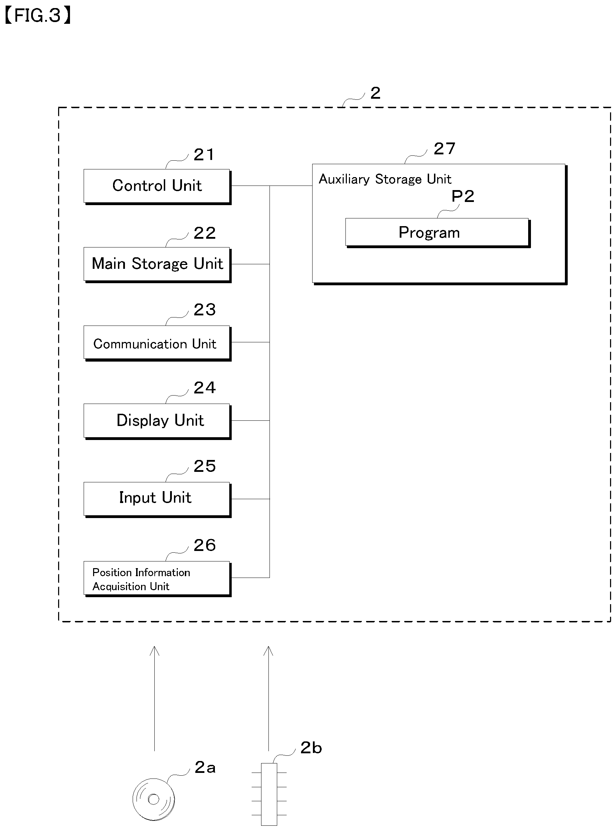

FIG. 3 is a block diagram illustrating a configuration of the user terminal 2. The user terminal 2 includes a control unit 21, a main storage unit 22, a communication unit 23, a display unit 24, an input unit 25, a position information acquisition unit 26, and an auxiliary storage unit 27. The control unit 21 includes one or more arithmetic devices such as a CPU or an MPU, and reads out and executes a program P2 stored in the auxiliary storage unit 27 to execute various information processing and control processing pertaining to the terminal 2. The main storage unit 22 is a temporary storage space such as a RAM, and temporary stores data necessary for the control unit 21 to execute arithmetic processing. The communication unit 23 includes an antenna for communication and a processing circuit, etc., for exchanging information with the outside. The display unit 24 is a displaying device, such as a liquid crystal display or an organic electro luminescence (EL) display, which displays images provided by the control unit 21. The input unit 25 is an operational interface, such as a touch panel or mechanical keys, for inputting operation contents into the control unit 21. The position information acquisition unit 26 is a communication module for acquiring position information (e.g., GPS position coordinates) of the user terminal 2. The auxiliary storage unit 27 is a non-volatile storage space such as a read only memory (ROM), storing the program P2, which is necessary for the control unit 21 to execute processes, and other data.

The user terminal 2 may include a reading unit for reading a portable storage media 2a, and may read out the program P2 from the portable storage media 2a to execute the program P2. Alternatively, the user terminal 2 may read out the program P2 from a semiconductor memory 2b.

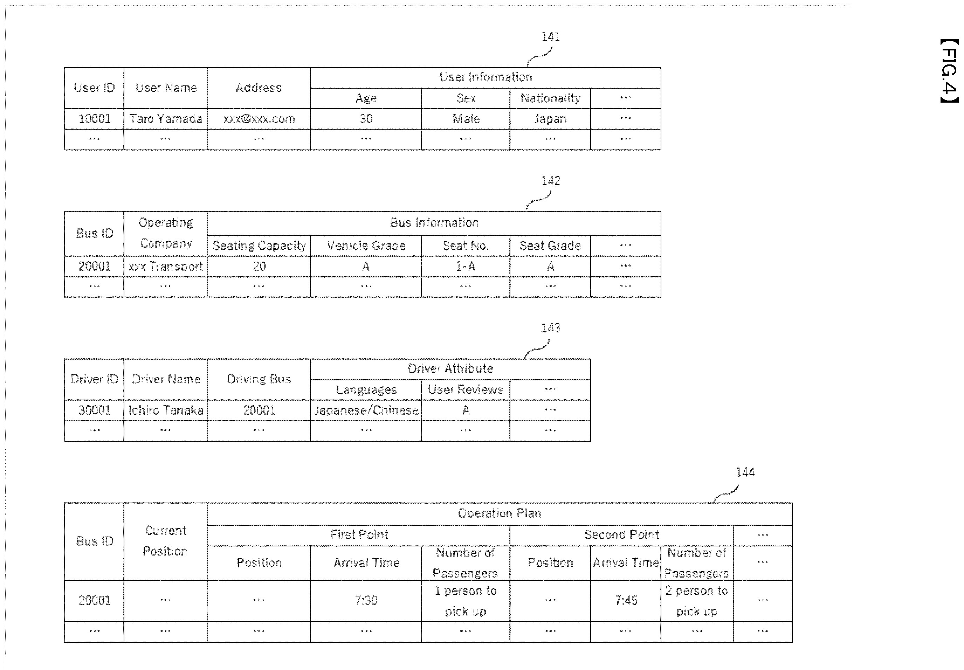

FIG. 4 is an illustration showing an example of layouts of records in the user DB 141, the bus DB 142, the driver DB 143, and the operation plan DB 144. The user DB 141 includes a user ID column, a user name column, an address column, and a user information column. The user ID column stores user IDs for identifying individual users. The user name column, the address column, and the user information column store, in association with the user IDs, users' names, e-mail addresses, and other user information, respectively. The user information column stores attribute information of users (passenger attribute information), such as age, sex, nationality, organization (company etc.) to which the user belongs, hobby, resident area, and rank (customer priority according to frequency of use of the buses 3 etc.).

The bus DB 142 includes a bus ID column, an operating company column, and a bus information column. The bus ID column stores bus IDs for identifying individual buses 3. The operating company column and the bus information column store, in association with the bus IDs, company names of service companies (operating companies) and information relating to the buses 3, respectively. The bus information column stores attribute information (vehicle attribute information) of the buses 3, including not only the number of passengers allowed on board and seat numbers of the bus 3 but also a vehicle grade representing evaluation values of the bus 3, a seat grade representing evaluation values of the seats, information on whether the vehicle is a women-only vehicle or not, information on whether the vehicle is a welfare vehicle or not, and information on services provided on-board (e.g., tour-guide service, massage or nail service, etc.).

The driver DB 143 includes a driver ID column, a driver name column, a driving bus column, and a driver attribute column. The driver ID column stores driver IDs for identifying individual drivers. The driver name column, the driving bus column, and the driver attribute column store, in association with the driver IDs, names of the drivers, the bus IDs of the buses 3 that the drivers drive, and other information relating to the drivers, respectively. The driver attribute column stores drivers' attribute information including languages that the drivers can speak, users' reviews, sex, etc., for example.

The operation plan DB 144 includes a bus ID column, a current position column, and an operation plan column. The bus ID column stores the bus IDs for identifying the individual buses 3. The current position column and the operation plan column store, in association with the bus IDs, current positions of the buses 3 and other information relating to the operation plans for the buses 3, respectively. The operation plan column stores, for each of points (the first stop, the second stop, ..., and so on) at which the buses 3 are scheduled to stop in turn, a position of the point, scheduled arrival time, the number of passengers getting on or off at the point, etc., for example.

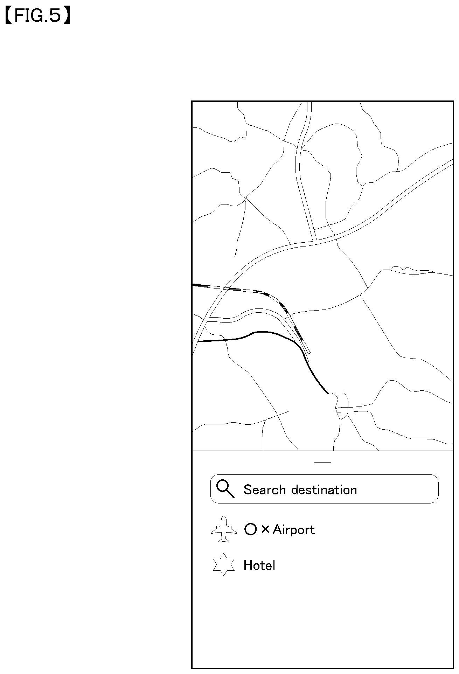

FIG. 5 is a view illustrating an example of a location-setting screen. An outline of the present embodiment will be described hereinafter. As mentioned above, the bus 3 is a shuttle bus running back and forth between a departure point and a destination point. The bus 3 picks up passengers at the departure point and heads toward the destination point, and then picks up passengers at the destination point again and returns to the departure point. However, points at which the bus 3 stops are not limited to these two points: departure point and the destination point. The bus 3 may stop at other points between the departure point and the destination point to pick up or drop off passengers. The server 1 receives a request of use of the bus 3 from the user terminal 2 of each user and creates an operation plan that determines a forward path to the destination point and a return path to the departure point.

The user terminal 2 firstly displays the location-setting screen shown in FIG. 5 and receives inputs for setting an requested get-on point at which a user wishes to get on the bus and an requested get-off point at which the user wishes to get off the bus. In the descriptions hereafter, for convenience and simplification, a term "requested points" shall be used to generically call the requested get-on point at which the user wishes to get on the bus and the requested get-off point at which the user wishes to get off the bus. The user terminal 2 displays a map image on the location-setting screen, for example, and receives an input from the user setting the requested points. Alternatively, the user terminal 2 may receive text inputs of the requested points, let the server 1 search candidate points based on the input texts, and receive inputs from the user selecting the requested points from the candidate points. Further alternatively, the user terminal 2 may display a plurality of candidate points that are registered in advance and receive inputs from the user selecting the requested points from the candidate points. Further alternatively, the user terminal 2 may find a current position of the user based on position information acquired by the position information acquisition unit 26 and set the current position of the user as the requested get-on point.

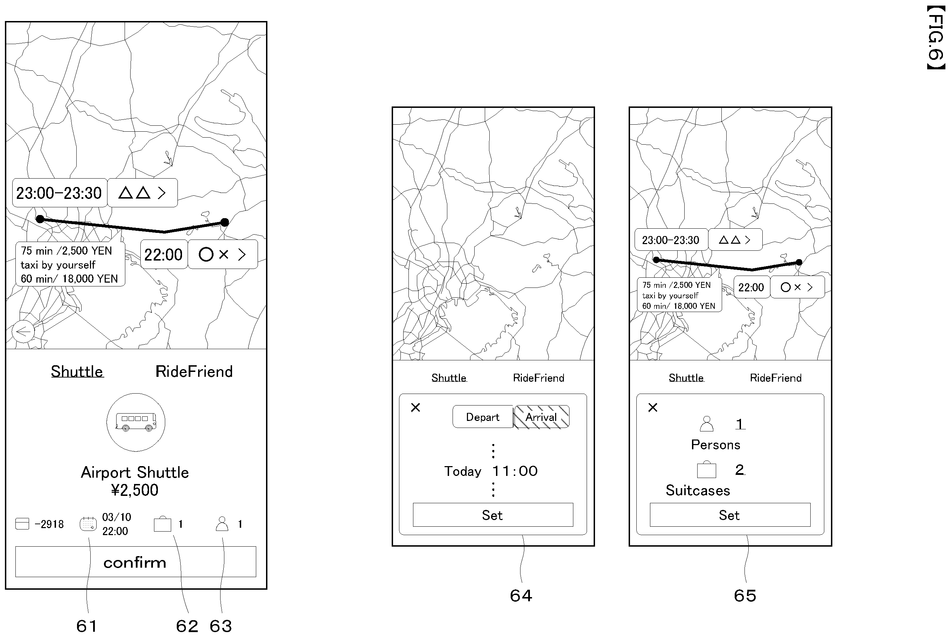

FIG. 6 is a view illustrating an example of a bus-reservation screen. After completing entering the inputs for setting the requested points on the location-setting screen, the user terminal 2 changes its screen to the bus-reservation screen shown in FIG. 6. The user terminal 2 displays a map image showing the departure point and the destination point of the bus 3 on an upper part of the bus-reservation screen. Also, the user terminal 2 displays a time icon 61, a luggage icon 62, and a number-of-persons icon 63 on the bus-reservation screen.

When receiving an operational input on the time icon 61, the user terminal 2 firstly displays a popup of a time-setting form 64. The user terminal 2 receives inputs for setting a requested get-on time or a requested get-off time through the time-setting form 64. The requested get-on time and the requested get-off time are the time at which the user wishes to get on the bus 3 and the time at which the user wishes to get off the bus 3 at the destination point, respectively. The user terminal 2 may receive an input for setting either one of the requested get-on time or the requested get-off time, for example. In the descriptions hereafter, for convenience and simplification, a term "requested times" shall be used to generically call the requested get-on time and the requested get-off time.

Also, when receiving an operational input on the luggage icon 62 or the number-of-persons icon 63, the user terminal 2 displays a popup of a luggage/number-of-persons setting form 65. The user terminal 2 receives through the luggage/number-of-persons setting form 65 inputs for setting information on luggage that the user carries (e.g., luggage types (bags, suitcases, etc.), weight, size, the number of pieces, etc. of the luggage) and the number of passengers to get on.

The server 1 acquires from the user terminal 2 the various information (passenger information), including the requested points, the requested times, the luggage information, the number of persons, etc., that is input into the user terminal 2 as above, and receives the request for use. The server 1 then creates, based on the acquired passenger information, an operation plan that determines a route on which each bus 3 picks up or drops off the user (a passenger).

The bus 3 in the present embodiment operates picking up users (and user's hand baggage) only. However, the embodiments in the present invention are not limited thereto, and the system may accept a request for carrying luggage only. Here, the luggage includes luggage that is irrelevant to the passengers of the bus 3, i.e., luggage of a user who does not get on the bus 3 but wishes the bus 3 to carry the luggage to a hotel, etc. For example, the server 1 receives from the user terminal 2, in addition to the above passenger information, a request for carrying luggage to a destination point (the request including, for example, a dispatching location, a delivery location, expected dispatching time, expected delivery time, etc.). In such the case, the server 1 considers the luggage as a boarding matter that is equivalent to a passenger (a user), and creates the operation plan by performing clustering as follows. In this way, the server 1 may create an operation plan for carrying luggage along with the users.

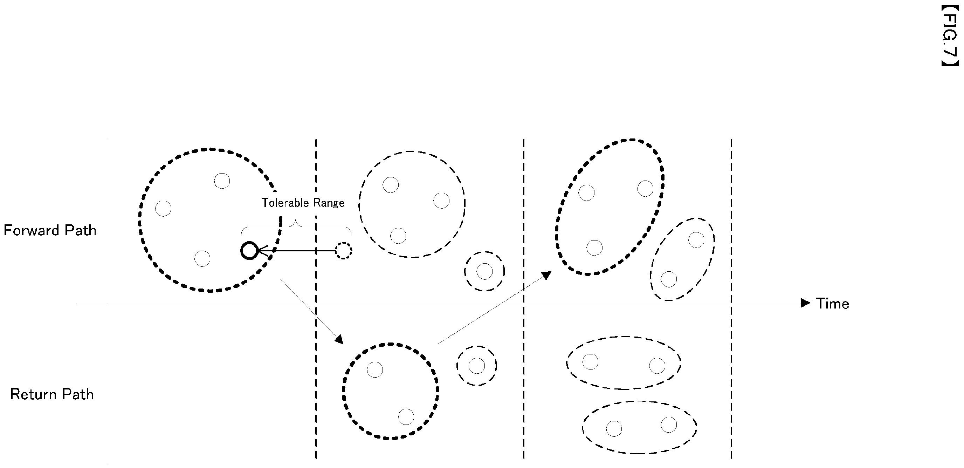

FIG. 7 is a view illustrating a process for creating an operation plan. An outline of creating a process of an operation plan will be described hereinafter based on FIG. 7. The server 1 acquires the passenger information (first passenger information) including the requested points and the requested times from each of the users' user terminals 2. The server 1 performs clustering for sorting the users into a plurality of clusters (groups) based on the requested points and the requested times presented by the passenger information from the users.

FIG. 7 shows a schematic vector space pertaining to the clustering. In FIG. 7, the horizontal axis represents time, and the vertical axis represent geographical space (points). Also, an upper part of the horizontal axis represents a vector space for a forward path, and a lower part thereof represents a vector space for a return path. Also, the dotted lines in the vertical axis represent borderlines of time zones partitioned at predetermined time intervals (e.g., every half an hour). The clustering is performed in multiple dimensions of three or more dimensions in reality. However, FIG. 7 shows the vector space in two dimensions for drawing convenience.

The server 1 maps each user on the vector space based on the requested points and the requested times of the user. Then, the server 1 performs the clustering, grouping one or more of the users in each time zone partitioned at the predetermined time intervals to form each cluster. A method for the clustering is not particularly limited: the server 1 may use a method such as a k-means method or a c-means method to form the clusters.

The reason that the server 1 herein performs the clustering in each of the predetermined time zones is that the present embodiment assumes a pick-up bus from and to airports, and the transportation is to be completed by predetermined departure and arrival times of flights. Forming the clusters in each of the time zones partitioned at the predetermined time intervals can achieve the suitable pick-up service.

The bus 3 in the present embodiment is a shuttle bus going back and forth between the departure point and the destination point, and thus the server 1 performs clustering separating the passengers getting on along the forward path from the passengers getting on along the return path. That is, when the server 1 acquires from the user terminal 2 the passenger information including the destination point as the requested get-off point, the user is mapped on the vector space on the forward path side to be clustered. When the server 1 acquires from the user terminal 2 the passenger information including the destination point as the requested get-on point, the user is mapped on the vector space on the return path side to be clustered.

The server 1 groups one or more of the users having the close requested points and requested times to form the cluster. The server 1 then creates the operation plan for the each bus 3 based on results of the above clustering.

More specifically, the server 1 allocates the bus 3 to each cluster and creates the operation plan for picking up the users in each cluster. For example, as shown in FIG. 7, the server 1 allocates the bus 3 for the cluster of the forward (or return) path in one of the time zones, and then selects the cluster in the next time zone for the return path to which the same bus 3 is to be allocated so the bus 3 can be operated to pick up and drop off the users belonging to the clusters. Furthermore, the server 1 selects the cluster for the forward path in the next time zone to be operated. The server 1 performs allocations for each cluster to each of the plurality of the buses 3, of which operations are under instructions of this system, to create the operation plans so that the users in all the clusters can get on the bus 3.

For example, if the cluster includes the different requested points of the users, the server 1 decides the get-on point or the get-off point at which each of the users gets on or gets off (hereinafter, appropriately referred to as a "getting-on/off point") and the get-on time or the get-off time at which each of the users gets on or gets off (hereinafter, appropriately referred to as a "getting-on/off time"), and estimates the most suitable service route for picking up and dropping off the users. The server 1 estimates the most suitable path for each cluster and completes the operation plan.

In the present embodiment, the server 1 creates the above operation plan by using a method for solving the travelling salesman problem. That is, when the plurality of buses 3 are available, the server 1 creates the operation plan by attributing the problem to a combinational optimization problem, finding the most suitable solution for a combination of the plurality of buses 3 for picking up and dropping off all the users. For example, the server 1 calculates a cost value to evaluate the operation plan based on waiting time of each user, waiting time of the bus 3 between the clusters, and operation time and distance, etc. of the bus 3. The server 1 creates the operation plan so as to minimize the cost value.

In such the case, the server 1 may provide restricting conditions such as total operation time of each bus 3, the number of going back and forth between the departure point and the destination point, etc. and create the operation plan under the restricting conditions. This can suitably manage labor environment of the drivers of the buses 3.

Also, it is preferable that the server 1 creates the operation plan for each bus 3 based on the number of buses 3 with no passengers among the plurality of buses 3. The buses 3 with no passengers include the bus 3 that is not in operation waiting at a predetermined base station, the bus 3 that is waiting on the road without passengers, the bus 3 in operation without passengers (the bus 3 not in service), and so on. For example, the server 1 may calculate the cost value low as the number of the buses waiting at the base is larger so that the operation plan in which the number of buses 3 in service is smaller as a whole can be created. Also, the server 1 may calculate the cost value low as the number of the buses waiting on the road or the number of buses without passengers in service is smaller so that the operation plan that can reduce inefficiency of the operation of the buses 3 can be created. This can solve imbalance of the number of passengers and achieve appropriate operations of the buses 3.

The travelling salesman problem is an example of the optimization method for the operation plan, and the server 1 may perform optimization of the operation plan using any other algorithms.

The creation of the operation plan may be performed once, regularly, or two or more times corresponding to changes made to the reservation status. For example, the server 1 creates the operation plan for the users who have reserved through the bus-reservation screen before a predetermined reservation finalize time point (for example, a time limit (e.g., 0 AM of an operation day) for submitting to the bus company an order for the number of buses to be arranged for the day) and finalize the reservation. In this case, the server 1 repeats creating the clusters until the reservation finalize time point and creates the operation plans one after another. For example, when receiving a new request of use of the bus 3 (a reservation) from a user C after already sorting users A and B into a cluster and creating an operation plan, the server 1 performs clustering once again for the users A and C, excluding the user B, and sorting the users A and C into the same cluster if this costs lower than the originally planned operation plan. As above, the server 1 repeatedly exchanges the groups (clusters) to which the users belong to create the operation plans one after the other. Once the reservation finalize time point has passed, the exchange of the groups for the already reserved users does not happen anymore, and updating process of the operation plan, which will be described below, is carried out to an extent that there is no exchange of the groups.

At the time of creating the operation plan as above, the server 1 may create the operation plan in which the time to pick up or drop off the user is different from the requested times set by the user. For example, when receiving a request for use, the server 1 acquires from the user terminal 2 the passenger information including an input of tolerable time that the user can tolerate from the requested times. The server 1 changes the user's position on the vector space within a range of the tolerable time as shown in FIG. 7 to decide the bus 3 that picks up the user.

In this case, as described below, it is preferable that the server 1 changes the user's ride fare depending on the tolerable time. This can facilitate the optimization of the operation plan.

Besides the requested times, the server 1 may make the get-on point and the get-off point, where the user gets on or off, different from the user's requested points. For example, if picking up the user at a point different from the requested point makes the operation time shorter for more than a criterion time, the server 1 may have the get-on point that is different from the requested point. For example, if picking up the user at a point on a side of a road opposite to the requested point makes the operation time shorter, the server 1 may have the get-on point on the opposite side of the road. Alternatively, the server 1 may have the get-on point on a current route of the bus 3 that is closest to the user's requested point. At this time, the get-on point may be a landmark on the map, such as an intersection or a facility.

In such cases, it is preferable that the server 1 notifies the actually decided get-on point to the user terminal 2 as will be described below, for example. This can facilitate guiding the user to the get-on point.

Also, the server 1 may allocate the bus 3 referring to information other than the requested points and times (perform matching) to create the operation plan. For example, the server 1 may perform clustering (sorting) based on the user's attribute information such as age, sex, nationality, etc. (passenger attribute information) and select the bus 3 for the user to get on. For example, the server 1 may perform matching between the attribute information of the users, sort the users having the same or similar attribute information into the same cluster, and allocate the bus 3 for the cluster. This can provide appropriate services of bus 3 such as providing a women-only car.

The above is an example for the allocation using the user's attribute information, and the present embodiment is not limited thereto. For example, according to the organizations (companies) to which the users belong, the server 1 may try not to allocate the same bus 3 for the users in the same business field. Also, the server 1 may allocate the same bus 3 preferentially for the users having a common hobby. Alternatively, the server 1 may give priority to the users with high ranks (degrees of good customers) in allocation. As above, there are various methods for allocation based on the user's attribute information.

Also, for example, in addition to the user's attribute information, the server 1 may perform the clustering based on the attribution information of the driver of the bus 3 (the driver's attribute information) to allocate the bus 3. The attribution of the driver includes the driver's skills (languages that the driver can speak, etc.) and reviews from users, for example. For example, the server 1 may perform matching between the user's attribute information and the driver's attribute information and select the bus 3 for the user to get on. This can provide appropriate services of the bus 3 such as allocating a driver that can speak the language corresponding to the user's nationality if the user is a foreign tourist.

Also, the server 1 may perform clustering based on the attribute information of the bus 3 itself (vehicle attribute information) to allocate the bus 3, for example. The attribute information of the bus 3 includes, for example, a vehicle grade representing evaluation values of the bus 3, a seat grade representing evaluation values of the seats, information on whether the vehicle is a women-only vehicle or not, information on whether the vehicle is a welfare vehicle or not, and information on services provided on-board. For example, when receiving requested conditions, such as the vehicle grade and the seat grade, as the passenger information from the user terminal 2, the server 1 may perform matching between requested conditions and the attribute information of the bus 3 and select the bus 3.

Upon performing the above matching (clustering), when receiving the request for use from the user terminal 2, the server 1 may, for example, receive inputs of the requested conditions on fellow passengers, the driver, the bus 3, etc. and perform the matching under the requested conditions. Also, server 1 may, for example, perform the matching automatically referring to the attribute information stored in the database, such as the user DB 141, the bus DB 142, and the driver DB 143, without receiving inputs of the requested conditions.

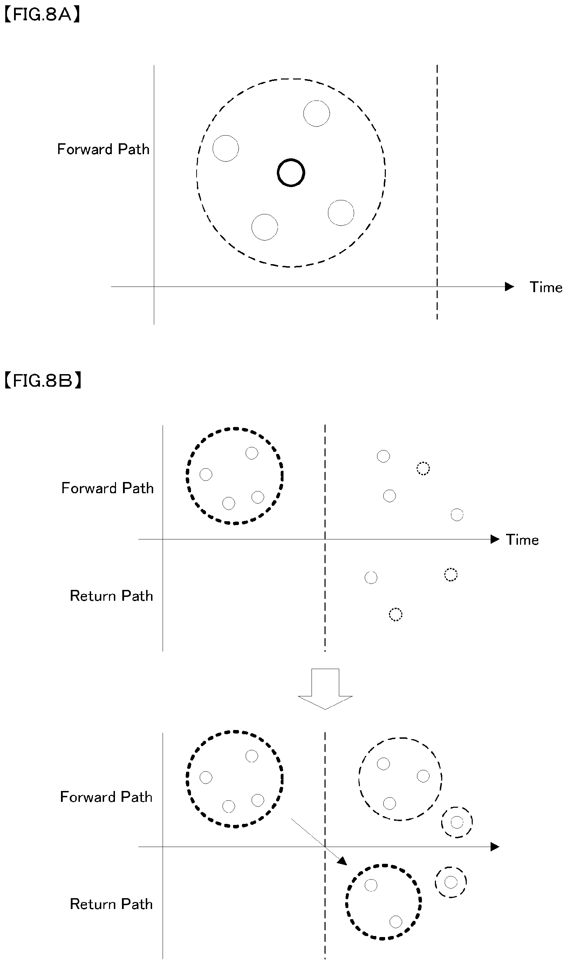

FIG. 8A and 8B are views illustrating an updating process of the operation plan. The server 1 in the present embodiment receives the requests for use from the user terminals 2 successively for real-time updates of the operation plan. FIG. 8A and 8B schematically illustrate the updating process of the operation plan.

FIG. 8A is a schematic view showing a process for picking up the additional user with a new request for use of the bus 3. When acquiring the passenger information on the new user from the user terminal 2 (second passenger information), the server 1 decides, based on the requested points and times shown by the newly acquired passenger information, whether or not to sort the new user into the same cluster for the users who have already reserved the bus 3. That is, the server 1 maps the new user on the vector space according to the requested points and times as shown by a thick line in FIG. 8A, and, as a result of the clustering, decides whether or not the user is sorted into the cluster for the reserved users to which the operation plan is already created. If the new user is sorted into the cluster with the already created operation plan, the server 1 changes the service route and time, etc. associated with the operation plan of the cluster and updates the operation plan so that the new user can get on the bus 3.

FIG. 8B is a schematic view showing a process of dynamically forming clusters for the users to be picked up by the bus 3 next. As mentioned above, the server 1 allocates the bus 3 for each cluster and creates the operation plan of the bus 3 for each cluster. At a predetermined timing after the bus 3 starts the service according to the operation plan pertaining to at least one cluster, the server 1 in the present embodiment forms the next cluster in succession to the first cluster, allocates the bus 3 for the next cluster, and creates another operation plan.

After the service of the operation plan for the first cluster is completed or between the starting time and the ending time of the service according to the operation plan, the server 1 performs the clustering for the users having the requested times in the time zone following the current time zone and forms the new cluster, for example. In such the case, the server 1 performs clustering, including the new users, to an extent that there is no exchange of the groups (clusters) for the already reserved users. The server 1 selects the cluster, out of the newly formed clusters, to be allocated for the bus 3 next, and creates the operation plan for the selected cluster. In this way, the server 1 updates the operation plan and notifies the driver of the service route and time associated with the updated operation plan to operate the bus 3.

As above, the server 1 forms the next cluster after the starting of the service of the bus 3 for the one cluster. This enables the server 1 to include the users with the new requests for use as much as possible in the next operation plan, and suitably update the operation plan.

The description of FIG. 6 will be continued. After completion of setting inputs of the requested times, luggage information, and the number of persons, etc., the user terminal 2 sends the user's passenger information to the server 1. In such the case, as mentioned above, the server 1 creates the operation plan based on the passenger information on passengers including the user. The user terminal 2 acquires from the server 1 and displays on the bus-reservation screen the information on the bus 3 (service guide) that is reserved according to the created operation plan.

For example, the user terminal 2 displays a ride fare, in addition to the name etc., of the reserved bus 3. Also, the user terminal 2 displays the service route of the bus 3 on the map image. In more detail, the user terminal 2 displays, in addition to the service route, the time required, and the ride fare of the bus 3, the time and fare required if other transports (e.g., a taxi) are taken.

In such the case, if the server 1 has created the operation plan in which the user's get-on/off time is different from the user's requested time, the server 1 sets the fare discounted from the standard fare according to the tolerable time tolerated by the user and displays the discounted fare on the user terminal 2. This can facilitate optimization of the operation plan.

In the present embodiment, the server 1 creates the operation plan in which the get-on/off time is different from the requested time when the difference between the get-on/off times and the requested time is within the tolerable time. However, the present embodiment is not limited thereto. For example, even if the difference between the get-on/off time and the requested time is more than the tolerable time, the server 1 may output the discounted fare to the user terminal 2. If the user accepts the fare, the server 1 may create the operation plan in which the difference between the get-on/off time and the requested time is more than the tolerable time.

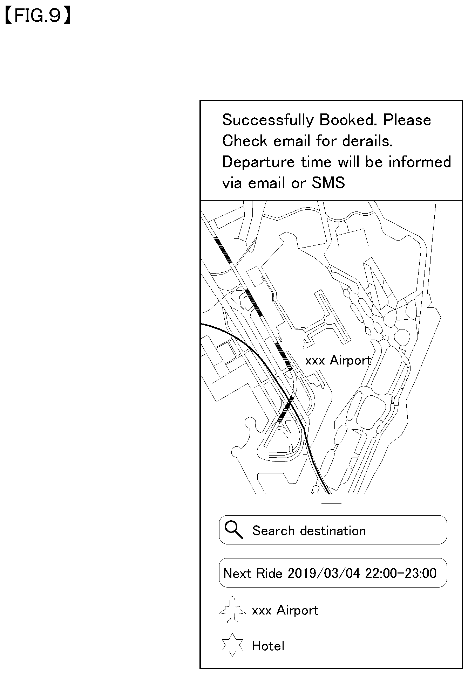

FIG. 9 is a view illustrating an example of a reservation confirmation screen. The user terminal 2 receives an input from the user whether or not to reserve the bus 3 being displayed on the bus-reservation screen shown in FIG. 6, and notifies the server 1. If being reserved, the server 1 notifies the driver's terminal 5 of the service routes etc. to be operated. The user terminal 2 changes its screen from the bus-reservation screen to the reservation confirmation screen shown in FIG. 9 to show the user that the reservation of the bus 3 has been completed.

Although the present embodiment receives confirmation of the reservation from only the user (passenger), it is more preferable to receive confirmation (approval) from the operating company of the bus 3 as in a third embodiment below. Processes for the operating company of the bus 3 and the individual drivers performed on a graphical user interface (GUI) will be described in the third embodiment.

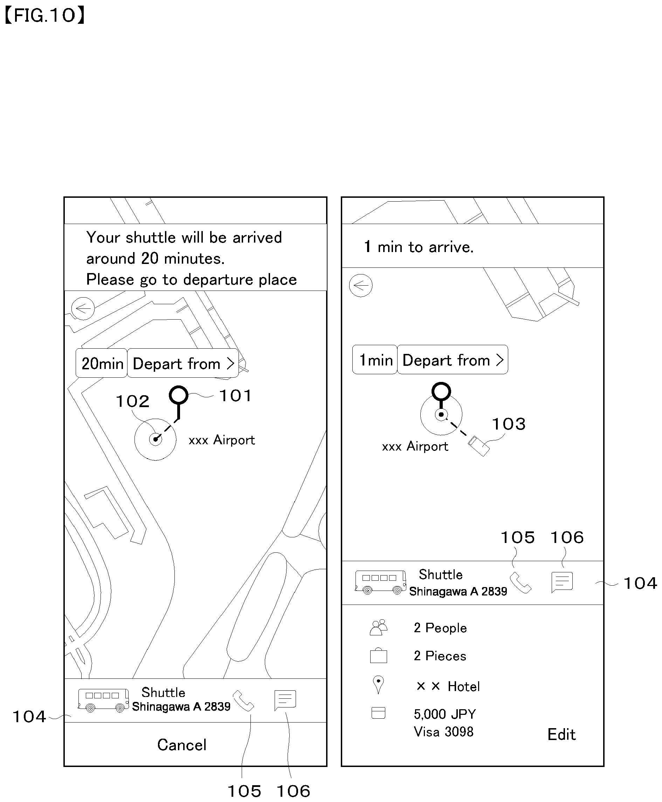

FIG. 10 is a view illustrating an example of a screen for checking operation status. After displaying the reservation confirmation screen shown in FIG. 9, the user terminal 2 changes its screen to the screen for checking operation status shown in FIG. 10, and displays real-time operation status (service guide) of the reserved bus 3 while performing communication with the server 1.

For example, the user terminal 2 displays a map image on the screen for checking operation status as shown on the left side of FIG. 10, displaying a user icon 101 indicating the user's current position and a stop position icon 102 indicating the scheduled stop position (get-on point) of the bus 3. If the operation plan including the get-on point that is different from the user's requested point has been created as mentioned above, the server 1 may notify the actual get-on point to the user terminal 2 by showing the stop position icon 102 as shown in FIG. 10 for smooth operation of the bus 3. Displaying also the current position of the user enables further smoother operation of the bus 3.

The user terminal 2 also displays an expected arrival time of the bus 3, which is estimated from a distance between the current position of the bus 3 and the scheduled stop position of the bus 3. When the current position of the bus 3 has moved to a position within a range of the currently displayed map image, the user terminal 2 displays the bus icon 103 showing the current position of the bus 3 on the screen for checking operation status as shown on a right side of FIG. 10.

The user terminal 2 also displays a bus information column 104 on a lower part of the screen, for example, to show information on the reserved bus 3 (such as vehicle registration number). The user terminal 2 also displays within the bus information column 104 a call icon 105 and a message icon 106 for making communication with the driver. When receiving an operational input on the call icon 105 or on the message icon 106, the user terminal 2 transmits and receives calls or messages to and from the driver's terminal 5 via the server 1. Furthermore, when receiving a vertical swiping operation on the bus information column 104, the user terminal 2 displays the number of passengers, the luggage information, destination or departure point, the ride fare, etc. registered at the time of reservation.

Although the server 1 above notifies and displays the service status of the bus 3 to the user terminal 2 of the user who has reserved the bus 3, the present embodiment is not limited thereto. For example, the server 1 may notify the service status to the user terminal 2 of the other users who have not yet reserved the bus 3 (a candidate passenger) and receive the requests for use of the bus 3. For example, the server 1 checks a vacancy of the bus 3 in service referring to the created operation plan. If there are any vacancies, the server 1 notifies the other users' user terminals 2 of the current position and the destination of the bus 3, the number of persons that can get on the bus 3, etc. and receives the request(s) for use. Alternatively, the server 1 may output such information to websites, electric bulletin boards installed at predetermined locations, travel agents, etc. and receive the request(s) for use. As above, by outputting the vacancy of the bus 3 and receiving the request for use in response to the output, the user in immediate need for the bus 3 can consider the vacancy of the bus 3 that is currently in service and suitably send the request for use.

When notifying the vacancy of the bus 3 to the user, the server 1 may, for example, acquire the user's schedule from an external API (a scheduler) to check possibility of taking the ride, and notify the vacancy only to the user with the possibility. The possibility of taking the ride may be checked by, for example, checking if there are any plans for embarking on or disembarking from a flight, participating in an event, or checking in or out a hotel. This enables suitable promotion of usage of the bus 3.

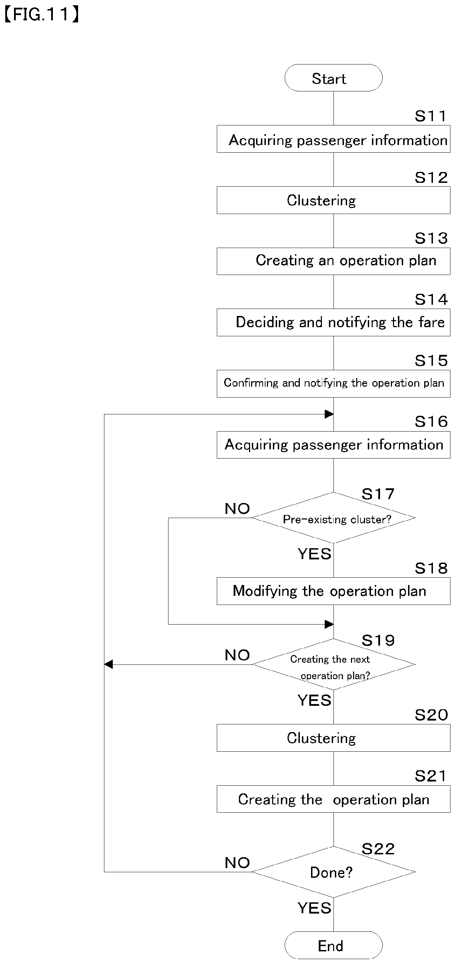

FIG. 11 is a flowchart for showing an example of a processing procedure executed by the server 1. Processes executed by the server 1 will be described hereinafter based on FIG. 11. The server 1 acquires the passenger information (the first passenger information) from each of the users' user terminals 2 and receives the request for use (a step S11). The passenger information includes at least the requested points (the requested get-on point or the requested get-off point) and the requested times (the requested get-on time or the requested get-off time). More specifically, the passenger information includes, in addition to the requested points and the requested times, the number of passengers to get on or off, the luggage information, the tolerable time between the requested time and the actual get-on time, and so on.

The server 1 sorts out the users into the plurality of clusters (groups) based on the requested points and requested times of each user (a step S12). Then, the server 1 allocates the bus 3 to each of the clusters and creates the operation plan for each cluster for picking up and dropping off the users (a step S13). In such the case, the server 1 may also refer to, in addition to the requested points and the requested times, the passenger attribute information, the driver attribute information, the vehicle attribute information, etc. to select the bus 3 for the user to get on and off and create the operation plan.

The server 1 decides the ride fares according to the created operation plan, and notifies information on the bus 3 (the service guide) including the ride fares to the user terminal 2 (a step S14). For example, if the get-on time for the user to get on the bus 3 is different from the requested time, the server 1 decides the ride fare according to the tolerable time that the user has set. The server 1 notifies, in addition to the ride fare, the information such as the service route and the required time of the bus 3 to the user terminal 2, and receives a response on whether or not to confirm the reservation of the bus 3. Upon receiving a response to confirm the reservation of the bus 3 from the user terminal 2, the server 1 finalizes the operation plan and notifies the service route etc. to the driver's terminal 5 (a step S15).

The server 1 further acquires the passenger information (the second passenger information) and receives the request for use from the user terminal 2 of the new user who is different from the user whose request for use has been accepted in the step S11 (the already reserved user) (a step S16). The sever 1 decides, based on the newly acquired passenger information, whether or not to sort the new user into the already formed cluster (a step S17). If the new user is to be sorted into the already formed cluster (S17: YES), the server 1 modifies the service route and service times, etc. of the operation plan of the bus 3 that corresponds to the cluster into which the new user is to be sorted so that the operation plan is updated to pick up the new user (a step S18).

After completing processing of the step S18, or if the step S17 is NO, the server 1 checks if it is the predetermined timing for creating the next operation plan of the bus 3 (a step 19). The timing criteria to be checked in the step S19 is a time at least after the bus 3 starts the service for picking up and dropping off the users in the cluster allocated under the current operation plan. For example, the server 1 checks, for the operation plan of the bus 3 pertaining to the cluster, if it is a timing after the completion of the service or not, or if it is a timing between the start and the completion of the service or not.

If the server decides that it is the time to create the next operation plan (S19: YES), the server 1 performs clustering to sort out the reserved user who has not been picked up and the user whose passenger information has been newly acquired in the step S16 into the plurality of clusters, and forms the new cluster (a step S20). Then, the server 1 allocates the bus 3 to the newly formed cluster and creates the new operation plan (a step S21).

The server 1 checks if a predetermined finishing condition to finish the service of the bus 3 (e.g., the end of the service hours) is satisfied or not (a step S22). If the answer in the step S19 or S22 is NO, the server 1 returns the process back to the step S16. If the answer in the step S22 is YES, the server 1 terminates the series of processes.

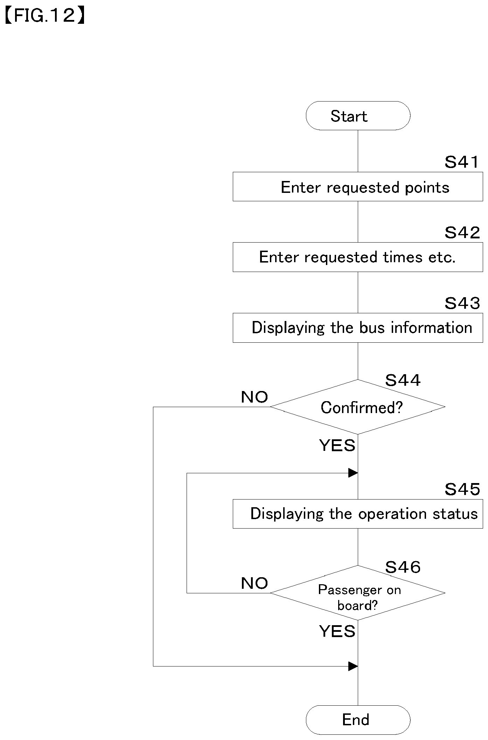

FIG. 12 is a flowchart for showing an example of a processing procedure executed by the user terminal 2. Processing executed by the user terminal 2 will be described hereinafter based on FIG. 12. The user terminal 2 displays a location-input screen and receives inputs of the requested points, which are sent to the server 1 (a step S41). The user terminal 2 changes its screen to the bus-reservation screen and receives inputs of the requested times, the number of passengers, the luggage information, etc. which are sent to the server 1 (a step 42).

The server 1 creates the operation plan based on the information entered in the steps S41 and S42. The user terminal acquires from the server 1 the information on the bus 3 (the service guide) to be allocated for the user and displays the information on the bus-reservation screen (a step S43). For example, the user terminal 2 displays, in addition to the ride fare and required time etc. of the bus 3, the ride fare and required time etc. if the user takes other transports. The user terminal 2 checks if the reservation for using the bus 3 is confirmed or not according to the operational input from the user (a step S44).

If the reservation is confirmed (S44: YES), the user terminal 2 displays the reservation-confirmation screen and changes its screen to an allocated-bus status checking screen to show the current operation status of the bus 3 (the service guide) (a step S45). For example, the user terminal 2 displays the current position of the user, the get-on point for the user to get on the bus 3, the arrival time of the bus 3, the current position of the bus 3, etc. The user terminal 2 checks if the bus 3 has arrived at the get-on point and user has got on the bus 3 or not (a step S46). If it is decided that the user is not on board (S46: NO), the user terminal 2 returns the process back to the step S45 and continues displaying the operation status. If the step S44 is NO, or step S46 is YES, the user terminal 2 terminates the series of processes.

As above, according to the first embodiment of the present invention, dynamic creation of the operation plan can be performed suitably based on the passenger information (the first passenger information) of the user (passenger) who has already reserved the use of the bus 3 and the passenger information (the second passenger information) of the user who has newly requested to use the bus 3.

Also, according to the first embodiment of the present invention, the clustering is performed based on the get-on/off points and get-on/off times presented by the passenger information, and the operation plan is created for each of the clusters. Thus, the operation plan for the bus 3 on which the plurality of users share the ride can be suitably created.

Also, according to the first embodiment of the present invention, the sever decides whether or not to sort the new user into the already formed cluster. If the new user is to be sorted into the already formed cluster, the server updates, so as to pick up the new user, the operation plan that corresponds to the cluster into which the new user is to be sorted. This can suitably perform real-time update of the operation plan.

Also, according to the first embodiment of the present invention, the bus 3 for the user to get on or off is selected according to the attribute information of the user (passenger), the driver, and the bus 3 (vehicle). Thus, more suitable operation plan can be created.

Also, according to the first embodiment of the present invention, it is possible to dynamically create the operation plans for both the forward path and the return path of the bus 3 shuttling between the predetermined departure point and the destination point.

Also, according to the first embodiment of the present invention, the operation plans are created according to the number of buses 3 with no passengers among the plurality of buses 3 to which the operation plan is to be created, so that efficiency of the operations of the buses 3 can be optimized as a whole.

Also, according to the first embodiment of the present invention, the actual get-on point is notified to the user when the bus 3 is to pick up the user at the get-on point that is different from the user's requested point so that the user's convenience can be improved.

Also, according to the first embodiment of the present invention, optimization of the operation plan can be facilitated by providing the tolerable time between the requested times and the actual get-on/off times. Also, the ride fare is changed according to the tolerable time, which can provide incentive to the user to cooperate in optimization of the operation plan.

Also, according to the first embodiment of the present invention, convenience of the user can be improved by notifying the service status, including the vacancy status of seats, of the bus 3 to the users who have not yet reserved the bus 3.

### (Variation 1)

In the first embodiment of the present invention, it has been described that the operation plan is created upon receiving the request for use of the bus 3 from the new user in addition to the already reserved users. However, the new user may not be limited to the user who actually requests the use of the bus 3 (making a reservation), but may be a user who is predicted to use the bus 3.

For example, the server 1 may estimate a demand value of the bus 3 by other users (new users) who are expected to use the bus 3 in addition to the already reserved users, and the server 1 may create the operation plan according to the estimated demand value. The demand value is an estimated value relating to flows of the users at locations such as the departure point (a hotel, etc.), the destination point (an airport, etc.), and other locations. Taking a hotel as an example, the server 1 predicts, from check-out or check-in time, the number of rooms, etc. of the hotel, the requested points and times (the second passenger information) of the request for use that the server 1 expects to receive from users staying at the hotel. Also, taking an airport as an example, the server 1 predicts, from timetables of flights, the requested points and times of the request for use that the server 1 expects to receive from users using the airport, for example. The server 1 acquires demand information relating to such the demand values from external systems (e.g., websites of travel agencies, flight reservation websites) to create the operation plan.

More particularly, the server 1 decides the number of buses 3 to be in service according to the demand value and creates the operation plan that operates with the number of the buses 3. For example, for dates and times where the demand value is high, the server 1 increases the number of buses 3 in service so that the users are dispersed on the plurality of the buses 3 and the new requests for use on the very day can be accepted. Meanwhile, for dates and times where the demand value is low, the server 1 reduces the number of buses 3 in service and creates the operation plan so to increase the number of passengers on each of the buses 3 and to reduce the number of stand-by buses 3.

The demand information has been described taking the hotel and the airport as examples above. However, the present embodiment is not limited thereto. The demand information may be any data that allows the server 1 to predict the requests for use from new users. For example, instead of acquiring the demand information via the external systems, the server 1 may predict the demand value from the past operation plans to create the new operation plan.

Instead of the demand value of the bus 3, the server 1 may also predict and use a supply value of the bus 3 (supply information) for the operation plan. The supply value decides whether it is possible to pick up the new users or not. The supply value of the bus 3 is, for example, an occupancy rate of each bus 3 or the number of buses 3 in service as a whole, etc., and is data that represents supply capability of the bus 3, showing whether the bus 3 is capable of picking up or dropping off all the users or not. For example, the server 1 refers to the past operation plans for different time zones, predicts the occupancy rate and the number of buses 3 in service, and creates the operation plan for each of the time zones based on the predicted occupancy rate etc. In this way, the server 1 can suitably create the operation plan, such as the operation plan in which the bus 3 is not entirely filled and have some vacant seats in some of the time zones.

As described above, the server 1 may create the operation plan for the new users based on the demand information or the supply information on the bus 3. In such the case, it is preferable that the server 1 sets the user's ride fare according to the demand information or the supply information. For example, the server 1 may set high fare for the time zones with the high demand value, where many users are estimated to use the service. Also, for example, the server 1 may set high fares for the time zones with the low supply value, where it is predicted that there are small number of vacancies in the bus 3. This can disperse frequency of use of the each user and achieve smooth operation of the bus 3.

### (Variation 2)

In the first embodiment of the present invention, it has been described that the user travels a route from one point (the get-on point) to another point (the get-off point) all by the bus 3. However, public transportation other than the bus 3 may be used in combination for a part of the travel from the one point to the other.

The examples of public transportation are, but not limited to, airplanes and railway trains other than the bus 3. The server 1 may create the operation plan on an assumption that the user uses such public transportation.

For example, if the fare is cheaper for the user to travel by public transportation for a part of the route between the requested get-on point and the requested get-off point, the server 1 may suggest the user to use the public transportation in combination with the bus 3. For example, when acquiring the user's passenger information (the requested points and the requested times) and receiving the request for use of the bus 3, the server 1 may create the operation plan for travelling from the requested get-on point to the requested get-off point all by the bus 3 and the operation plan using public transportation in combination with the bus 3. The method for creating a travelling route by using public transportation (flights and trains) in combination with the bus 3 is known, and a description thereof is omitted herein. The server 1 calculates a fare for the bus 3 based on the former operation plan and a fare (total fare for public transportation and the bus 3) based on the later operation plan. If the fare for the later is lower than the fare for the former, the server 1 adopts the operation plan in which pubic transportation is used in combination. For example, the server 1 may output information on the adopted operation plan to the user terminal 2 to obtain the user's approval.

Also, for example, the server 1 may suggest the user to use public transportation in combination with the bus 3 when service of the bus 3 is unavailable for a part of the route between the user's two requested points. An example for this may be a long distance travel (from Tokyo to Fukuoka, for example). For example, the server 1 decides whether the distance and travelling time etc. between the two points are longer than predetermined thresholds or not. If they are, the server 1 creates the operation plan in which public transportation is used in combination (for example, travelling by the bus 3 from Tokyo to Haneda, and travelling by airplane from Haneda to Fukuoka).

As described above, the operation plan may be created not only with the bus 3 but also by using public transportation in combination.

### (Second Embodiment)

In the first embodiment of the present invention, it has been described that the bus 3 is a shuttle bus going back and forth between the predetermined destinations. However, the bus 3 may not have a particular destination and may be an on-demand bus travelling around in a fixed area to pick up and drop off the users. An embodiment in which the bus 3 is an on-demand bus travelling around a fixed area will be described hereinafter.

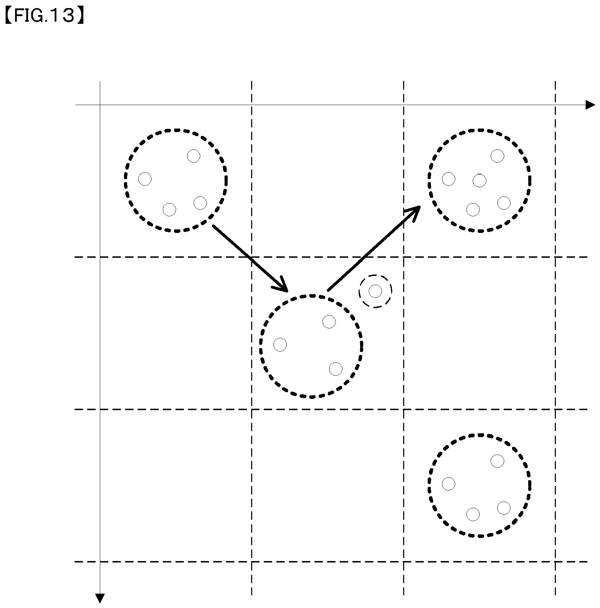

FIG. 13 is a view illustrating an overview of the second embodiment of the present invention. FIG. 13 is a schematic view showing a vector space at the time of clustering according to the present embodiment. An outline of the present embodiment will be described based on FIG. 13.

As mentioned above, the bus 3 has no particular departure point or destination point, and travels around in a fixed area to pick up or drop off each user in the present embodiment. Thus, instead of partitioning the vector space into the forward path and the return path, the server 1 divides the travelling area of the bus 3 into sections with a predetermined unit and partitions the vector space into such sections. Also, the time axis is divided by the predetermined unit of time zones as in the first embodiment. In this way, the server 1 partitions the vector space by the sections and time zones as shown in FIG. 13.

The server 1 maps each user onto the vector space based on the passenger information acquired from the user's user terminal 2. Then, the server 1 sorts out the users into the plurality of clusters. In creating the operation plan, the server 1 creates the operation plan allocating the bus 3 to the cluster for a certain time zone, and then creates the next operation plan allocating the cluster in any one of the sections in the next time zone. Similarly as in the first embodiment, the server 1 may optimize the operation plan by using the method for solving the travelling salesman problem, for example.

In such the case, similarly as in the first embodiment, it is preferable that the server 1 creates the operation plan according to the number of buses 3 with no passengers on board. More specifically, the server 1 calculates the cost value lower when the number of the buses 3 with no passengers is less. Thus, the operation plan in which the passengers on board are dispersed on all the buses 3 can be created.

As mentioned above, the operation planning system according to the first embodiment can be adapted to the on-demand bus travelling around without any particular destination. The present embodiment is similar to the first embodiment except for the form of services of the bus 3 and thus detailed descriptions such as flowcharts will be omitted herein.

### (Third Embodiment)

In the first embodiment of the present invention, it has been described that the server 1 receives the request for use of the bus 3 form each user (passenger), performs clustering, and creates the operation plan for each cluster to operate the bus 3. In the present embodiment, processing for letting the operating company to operate the bus 3 in practice will be described. The processing includes a process in which the created operation plan is allocated to each of the drivers and the buses 3 associated with the operating company, and a process in which a driving route following the allocated operation plan is presented to the driver of the bus 3 (the driver's terminal 5).

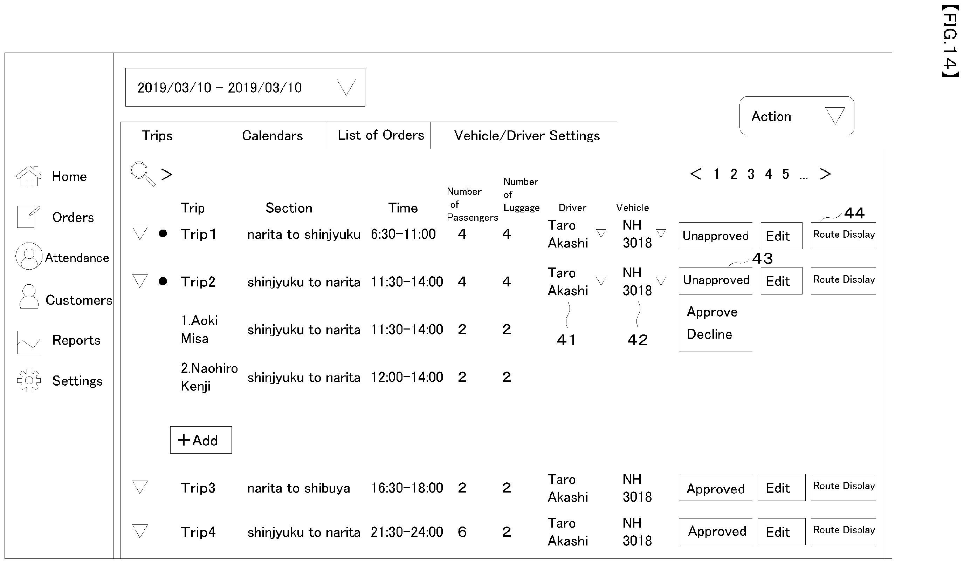

FIG. 14 is a view illustrating an example of a screen for a list of the operation plans. As mentioned above, the server 1 creates the operation plan for each of the clusters. In the present embodiment, the server 1 distributes the operation plan corresponding to each cluster to the company terminal 4 to be displayed on the screen for the list of the operation plans as shown in FIG. 14. The present embodiment may be used in either of the following cases: the bus 3 is allocated for the newly created operation plan for each of the new clusters formed based on the user's request for use of the bus 3 (more specifically, a case in which the clusters for people going from their home to an airport on a predetermined day are formed, and then the operation plans are created to allocate the buses running from the people's home to the airport on the predetermined day, for example); and in a case when there is the already created operation plan and the new request for use of the bus 3 from the user is received while the bus 3 allocated thereto is running, the user is sorted into the already formed cluster and included in the already created operation plan to be picked up or dropped off (more specifically, a case in which the taxi picks up the user when the user in a proximity of a running taxi sends the request for use).

For example, the company terminal 4 displays the list of information on the operation plans, including departure points, destination points, service time zones, the number of passengers, luggage information of each passenger, etc. Also, for example, the company terminal 4 shows default display of the driver and the bus 3 automatically allocated for each of the operation plans in a driver display column 41 and a bus display column 42, respectively. For example, each of the driver display column 41 and the bus display column 42 may have a selectable pull-down input menu so that changing (input of) the setting for the driver and the bus 3 is possible. Selecting a route display 44 displays a route from the departure point through the get-on points and get-off points to the destination point.

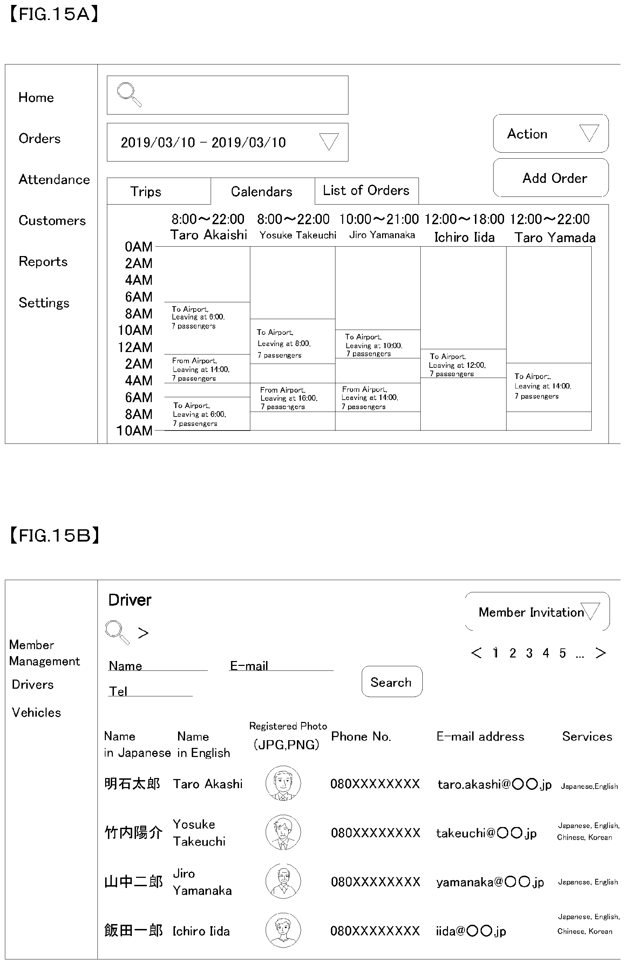

When automatically allocating the driver to the operation plan, the company terminal 4 refers to each driver's schedule (or each vehicle's schedule, the same applies hereinafter) shown in FIG. 15 as will be described below, and allocates the driver whose schedule is open during the time zone between the departure time and the arrival time of the operation plan (the driver who is available for the transportation on the schedule). At this time, if there are the plurality of drivers whose schedules are open, the most suitable driver may be allocated based on the passenger information on the passengers boarding according to the operation plan (language, nationality, address, position information, etc.), driver information (language, user's reviews, position information, etc.), the vehicle information (vehicle grade, seat grade, the number of vacant seats available for passengers), etc. Also, if there are the plurality of drivers whose schedules are open, the driver who is present at the closest position to the passenger may be allocated. More specifically, the driver whose position information (GPS information) is the closest to the position information (GPS information) of the passenger may be allocated. Alternatively, predicting from the driver's service schedule, the driver who will be at a location closest to the get-on point of the passenger at the get-on time of the passenger may be allocated (for example, if the passenger requests to get on at Haneda Airport at 14:15 on the operation plan, the driver who is scheduled for dropping-off at Haneda Airport at 13:45 may be allocated for the operation plan).

Also, when automatically allocating the vehicle (or the driver driving the vehicle) to the operation plan, the company terminal 4 may decide, from the number of passengers and the passenger's luggage information included in the operation plan, whether or not the vehicle can carry the number of the passengers and the luggage based on the vehicle information on the bus 3, which includes the number of transportable passengers and an amount of loadable luggage, so as to allocate the transportable vehicle (or the driver who drives the vehicle). In such the case, the passenger may be considered as transportable when the number of passengers included in the operation plan is less than the number of transportable passengers included in the vehicle information. Also, the luggage may be considered as transportable when the passenger's luggage information included in the operation plan is within a range of the amount of loadable luggage included in the vehicle information. Furthermore, in a case where the passenger's luggage information included in the operation plan is beyond the range of the amount of loadable luggage included in the vehicle information but the number of passengers included in the operation plan is less than the number of transportable passengers included in the vehicle information, the luggage may be considered as transportable provided that the luggage corresponding to the passenger's luggage information included in the operation plan that is beyond the range of the amount of loadable luggage included in the vehicle information can be carried on unoccupied seats in the vehicle. To decide whether the luggage corresponding to the passenger's luggage information included in the operation plan that is beyond the range of the amount of loadable luggage included in the vehicle information can be carried on unoccupied seats in the vehicle or not, one piece of luggage may be converted as one passenger on the vehicle, for example (or parameters for conversion of various types of luggage into the number of passengers may be set in advance and the conversion may be done based on the parameters). Then, the luggage may be considered as transportable provided that a sum of the number of passengers included in the operation plan and the converted number of passengers is less than the number of transportable passengers included in the vehicle information. Although an example of the luggage belonging to the passenger has been described herein, the luggage may not belong to the passenger (luggage belonging to a person other than the passengers, i.e. the luggage alone, may be carried by the vehicle).

When automatically allocating the driver or the vehicle to the operation plan and either of the departure point, get-on point, get-off point, or destination point of the operation plan is not within a service area provided by the company (an area that the company can operate the service), the company terminal 4 may perform a process not to allocate the driver or the vehicle to the operation plan.

Through the above-mentioned processes, the company terminal 4 refers to the driver's and vehicle's schedules, the passenger information, the driver information, and the vehicle information, etc., to decide the driver and the vehicle to be allocated to the operation plan, which are displayed as defaults. The operating company may freely change the displayed default settings of the allocated driver and vehicle through operations on the driver display column 41 and the bus display column 42.

FIG. 15A and 15B are views illustrating examples of a screen for displaying the driver information. In response to the operating company's operational inputs, the company terminal 4 switches its screen from the screen for the list of the operation plans shown in FIG. 14 to a schedule screen shown in FIG. 15A or to a profile screen shown in FIG. 15B.

The schedule screen shows a list of service schedules (operation schedules), in a form of time chart, of the drivers who works for the operating company. The schedule screen may also show working hours of the drivers, for example. The server 1 receives a request for an output of the schedule screen from the company terminal 4, creates the schedule screen referring to the operation plan DB 144, and provides the screen to the company terminal 4 to be displayed thereon.

The profile screen is a screen for displaying a list of bibliographic items, such as names and phone numbers of the drivers, as well as the attribute information of the drivers (e.g., languages that the driver can speak are shown in FIG. 15B). In response to a request for output from the company terminal 4, the server 1 creates the profile screen to be displayed on the company terminal 4.

Although the present embodiment showing only the driver information will be described herein, the company terminal 4 may also display a list of the vehicle information on each of the buses 3 belonging to the operating company, including service schedules, the number of transportable passengers, the amount of loadable luggage, and the types of the vehicle. This allows the operating company to grasp the vehicle information and facilitates the allocation of the bus 3.

The operating company can easily check the each driver's schedule and profile (particularly the driver's attribute information) from the schedule screen and the profile screen. Returning to FIG. 14, the operating company may operate the driver display column 41 and the bus display column 42 to input changes to the default settings of the automatically allocated driver and the bus 3. The above-mentioned processes can modify the allocation of the driver and the bus 3 that have been automatically decided by the company terminal 4 so that the operation plan can be more suitable.

In the present embodiment, the company terminal 4 sets the allocation of the driver and the bus 3 automatically and the operating company makes modifications manually. However, the operating company may manually set (decide) the allocation of the driver and the bus 3 without the automatic allocation by the company terminal 4. That is, as long as the company terminal 4 can decide the allocation of the driver and/or the bus 3, the processes may be automatically decided by the company terminal 4 or may be decided according to the results of the manual inputs.

Also, the driver whose service schedule is open between the departure time and the arrival time of the bus 3 is allocated to the operation plan in the above. However, contrary thereto, the driver's service schedule (i.e. work shifts) may be changed according to the operation plan. For example, the company terminal 4 may allocate the driver to each of the buses 3 referring to a table storing each driver's work hours per month, work hours per day, necessary holidays, the maximum driving distance that the driver can drive (run) per day, etc. and create the service schedule, which is presented to the operating company (or the driver) for an approval. As above, instead of allocating the driver from the driver's schedule, the driver's schedule may be changed so that the driver can be allocated to the operation plan.

Also, when changing the driver's schedule, the schedule may be changed by taking into consideration the demand information, which has been described in Variation 1. For example, the company terminal 4 decides whether the demand value of the bus 3 (the predicted number of the user getting-on or off) is more than a certain value or not, and, if it is higher than the certain value, then the company terminal 4 creates the schedule by raising the maximum value of the service hours etc. As above, the driver's schedule may be changed taking also the demand of the bus 3 into consideration.

The descriptions will be continued returning back to FIG. 14. The company terminal 4 displays an approval button 43 corresponding to each of the operation plan. When receiving an operational input on the approval button 43, a pull-down menu for "approve" and "decline" is shown to receive an input for approval or non-approval of the operation plan. For the already approved operation plan, the approval button 43 is changed to "Approved". In such the case, the company terminal 4 notifies (outputs) to the server 1 that the operation plan has been approved.

For example, the server 1 may be in cooperation with the plurality of the operating companies, and provides (outputs) the operation plan to the company terminal 4 of each of the operation companies. For example, the server 1 may display the screen shown in FIG. 14 to all the company terminals 4 and receive the first-come approval from any of the operation companies. Alternatively, the server 1 may have a table for priorities among the operation companies, and display the operating plan to the operating company with the highest priority first. If approved, the server 1 may receive the approval. If not approved, the server 1 repeatedly displays the operation plan to the operating company that is next in line on the priority table until the server 1 receives an approval. Upon receiving an approval from one of the company terminals 4, the server 1 removes the approved operation plan from the screen for the list of the operation plans displayed on the other company terminals 4.

The server 1 outputs the operation plan to the company terminal 4 and the operating company gives an approval to the operation plan in the present embodiment. However, the operation plan may be output to the driver's terminal 5 and the server may receive an approval from the driver.

In the above embodiment, it has been described that the operating company approves or disapproves each operation plan displayed on the company terminal 4. However, the operating company may put the plurality of operation plans together into a collected operation plan and give an approval thereto. That is, if there are operation plans including close areas and times that can be operated as a collected operation plan, the operating company may select the operation plans that can be put together and select the collection so that the company terminal 4 can display the collected operation plan. The operating company can approve the collected operation plan by using the company terminal 4.

Although the approval of the operation plan (an order) is received in order of arrival above, the present embodiment is not limited thereto. For example, the server 1 may decide which operating company to be entrusted according to charges to be paid to the operating company in consideration for taking on the operation plan. For example, upon receiving the operational input of "approved", the company terminal 4 further receives an input for the charge to be paid for the operation plan and notifies the server 1. The server 1 receives the notification of the charges from the company terminal 4 of each of the operating companies and decides to entrust the operating company with the lowest charge, for example. Deciding the entrusted operating company for the operation plan according to the charges can perform more suitable pick-up services.

In such the case, it is preferable that the server 1 provides a time limit (e.g. for five minutes) for receiving the notification of the charges after the operation plan is distributed. Providing the time limit can urge the operating company to quickly give an approval (an order) for the operation plan.

Also, although the operating company manually approves the operation plan (receiving an order) in the above, the company terminal 4 may automatically approve the operation plan (receiving an order). For example, the company terminal 4 may automatically approve all the operation plans in which processing for allocation of the drivers and the buses 3 are performed (in this case, the processing for allocation of the drivers and the buses 3 may include the approval processing as well). Alternatively, the company terminal 4 may automatically approve the operation plans, in which processing for allocation of the drivers and the buses 3 are performed, that satisfy predetermined conditions (for example, the distance between the departing point and the destination point is longer than a predetermined distance; or the number of passengers is more than a predetermined number, etc.).

In addition, upon receiving operational inputs of "approved" from the plurality of operation companies, the server 1 may select and decide the operating company based on all or a part of elements included in company information (user reviews, service area, etc.), the passenger information (languages, nationality, address, sex, etc.), the driver information (language, passenger's reviews, sex, etc.), the vehicle information (the number of transportable passengers, grade, etc.), charges, and so on.

Upon receiving an approval of the operation plan from the company terminal 4, the server 1 sends an e-mail, a short mail message, or the like (not shown in the drawing) including information on the operating company and the type of the bus 3, in addition to the get-on time and get-on point, to the user terminal 2. In such the case, for example, the server 1 may create an e-mail attached with a request for opening (reading) confirmation and notify the user terminal 2. When the e-mail is opened, the user terminal 2 automatically replies to the server 1 that the notification is opened. Upon receiving the reply, the server 1 notifies the company terminal 4 that the operation plan has been confirmed. Above processing can confirm the operation plan without an operator that mediates between the user and the operating company.

Even after the operating company approved the operation plan, passengers that can be sorted into the operation plan may be sorted into the operation plan.

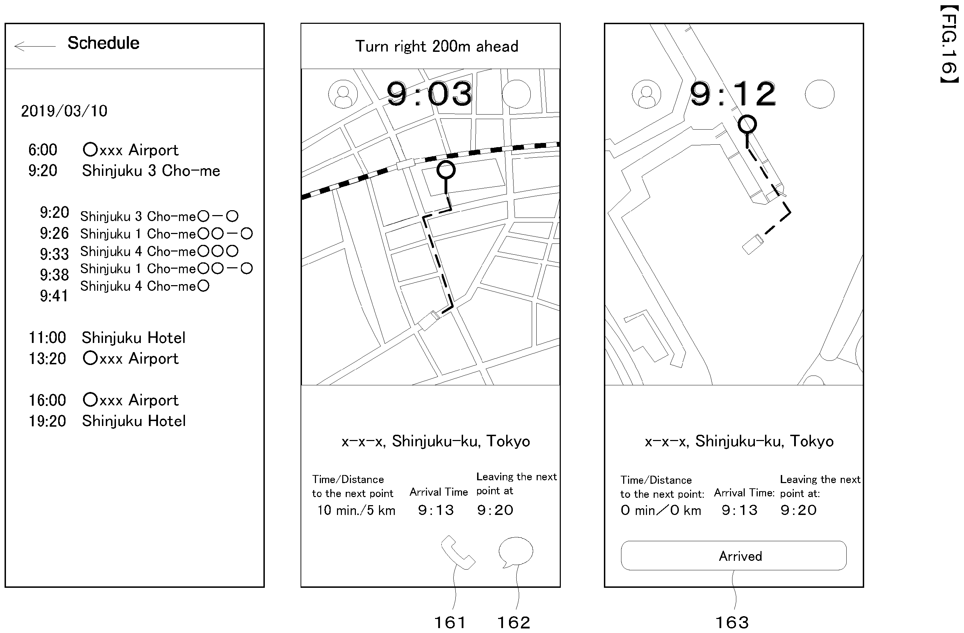

FIG. 16 is a view illustrating an example of a displaying screen of a driver's terminal 5. When the operation plan is confirmed, the server 1 distributes information on the operation plan to the driver's terminal 5 of the driver in charge to display the screen shown in FIG. 16.

For example, as shown on the left side of FIG. 16, the driver's terminal 5 displays first a list of the operation plans (forward or return services) of which the driver is in charge on that day. When each text showing the operation plan is tapped, the driver's terminal 5 displays a pull-down menu for the get-on/off times and get-on/off points of each user.

For example, the driver's terminal 5 receives a selection input to select any one of the operation plans, and changes its screen to a screen shown in the center of FIG. 16, which shows a route pertaining to the selected operation plan. The driver's terminal 5 may automatically display the screen in the center of FIG. 16 when it is time to start the service, for example. As shown in the center of FIG. 16, the driver's terminal 5 displays a map image showing the service route from the current position of the bus 3 to the get-on/off point of the user.

Hereinafter, for simplification, a forward path in which the bus 3 departing the departure point picks up users at different points en route to the destination point will be described.

The driver's terminal 5 firstly displays the service route heading toward the first user's get-on point. In addition to the service route, the driver's terminal 5 also displays information including address of the get-on point and a name of the user to be picked up, etc. on a lower part of the screen. Also, for example, the driver's terminal 5 may display a scheduled arrival time at the get-on point, a scheduled departing time from the get-on point, a distance from the current position, remaining service time estimated from the current position, and so on.

The driver's terminal 5 also displays, on the lower part of the screen, objects such as a call icon 161 and a message icon 162, for making a contact with the user who is getting on at the get-on point being displayed. When receiving an operational input on the call icon 161 or the message icon 162, the driver's terminal 5 communicates with the user's user terminal 2 via the server 1 by means of a call or message transactions.

For example, in response to an operational input from the driver, the driver's terminal 5 switches the display on the lower part of the screen to a display shown on the right side of FIG. 16. More specifically, the driver's terminal 5 displays on the lower part of the screen an arrival button 163 for inputting confirmation of arrival at the get-on point. Alternatively, the driver's terminal 5 may automatically display the arrival button 163 based on the distance etc. between the current position of the bus 3 and the get-on point, for example.

Upon arrival at the get-on point, the driver taps the arrival button 163. When receiving an operational input on the arrival button 163, the driver's terminal 5 acknowledges that the bus 3 has arrived at the get-on point and notifies the user terminal 2 via the server 1 that the bus 3 has arrived. For example, the driver's terminal 5 may notify by using an e-mail or a short mail message, or may make a call to the user terminal 2. This makes it possible to quickly inform the user of the arrival of the bus 3. Alternatively, instead of the driver tapping the arrival button 163, when the driver's terminal 5 acknowledges the arrival at the get-on point from the current position of the bus 3, the driver's terminal 5 may notify the user terminal 2 of the arrival of the bus 3 via the server 1.

When the user is on board, the server 1 switches the display on the driver's terminal 5 to show a route to the next get-on point. For example, the driver's terminal 5 may display an object (a button) similar to the arrival button 163 for accepting an operational input from the driver to acknowledge whether the user is on board or not. Alternatively, the server 1 may decide whether the user is on board or not based on the position information of both the bus 3 and the user (the user terminal 2). If the user is on board, the driver's terminal 5 displays the route to the next user's get-on point to continue the service.

In an event where the user does not arrive at the get-on point by the get-on time (i.e. the user has missed the bus 3), the server 1 may cancel the user's schedule for the ride. For example, if the server 1 acknowledges that the arrival button 163 is not operated by the get-on time and the user is not on board, the server 1 contacts the user terminal 2 asking whether the ride is to be cancelled or not. Similarly to the above, the server 1 may automatically acknowledge whether the user is on board or not based on the position information etc. When receiving from the user terminal 2 a response to such the contact approving the cancellation, the server 1 cancels the user's schedule for the ride and notifies the cancellation to the driver's terminal 5.

When the user misses the bus 3, the server 1 may let another bus 3 pick up the user. For example, the server 1 specifies from the operation plan DB144 the bus 3 having vacant seats among the buses 3 in service in the area, and notifies the driver's terminal 5 of the driver of such the bus 3 to pick up the user.

Although a case where the user's arrival is delayed has been described above, there may be cases in which the arrival of the bus 3 is delayed or the bus 3 arrives earlier. In such cases, the server 1 may change the bus 3 to pick up the user according to service status of each of the buses 3. For example, if the service schedule of the bus 3 that is to pick up the user is delayed (the arrival time at each get-on/off point of each user is delayed for more than a certain time from the scheduled get-on/off time) and the service schedule of the next bus 3 (the bus 3 having the same departure and destination points as the preceding bus 3, departing after the preceding bus 3) is also delayed, the server 1 lets the next bus 3 pick up the user. Also, for example, if the service schedule of the bus 3 that is to pick up the user is early (the arrival time at each get-on/off point of each user is early for more than a certain time from the scheduled get-on/off time) and the service schedule of the preceding bus 3 is also early, the server 1 lets the preceding bus 3 pick up the user. As above, the server 1 may modify (update) the operation plan according to the service status of the buses 3, changing the bus 3 for picking up the user.

When it is acknowledged (decided) that the user is on board at one of the get-on points, the server 1, for example, may notify to the user terminal 2 of the user who is to get on at the next get-on point a fact that the other user (the preceding user) has got on at the previous get-on point and the scheduled arrival time of the bus 3 at the next get-on point. This can let the user know the service status of the bus correctly, which improves convenience.

Every time the user gets on at each get-on point, the driver's terminal 5 switches and displays the service route. When all the users are finally on board, the driver's terminal 5 displays the service route to the destination point (an airport, etc.) to operate the bus 3 to the destination point.

For the return path, the driver's terminal 5 displays routes from the destination point (an airport, etc.) to the each user's get-off point in turn. In such the case, for example, when the driver's terminal 5 receives an operational input on the arrival button 163 upon arrival at the departure point, the driver's terminal 5 notifies to each user's user terminal that the bus 3 has arrived so that the user can get on. The driver's terminal 5 displays the routes to each user's get-off point according to the service status of the bus 3 and switches the service route every time the bus 3 passes the get-off point, navigating the bus 3 to each get-off point.

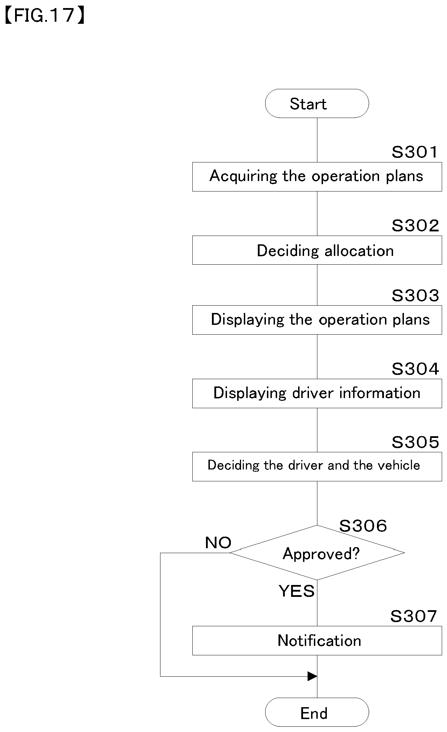

FIG. 17 is a flowchart for showing an example of a processing procedure executed by the company terminal 4. The processing procedure executed by the company terminal 4 will be described based on FIG. 17. The company terminal 4 acquires from the server 1 the plurality of operation plans created based on each user's request for use (passenger information) (a step S301). The company terminal 4 decides the driver and the vehicle to be allocated to each operation plan based on contents of the operation plan, the driver's schedule, the vehicle's schedule, the passenger information, the driver information, the vehicle information, and so on (a step S302). The company terminal 4 then displays a list of the acquired pluralities of operation plans (a step S303). In this case, the company terminal 4 displays a list of the operation plans to which the drivers and the vehicles are allocated in the step S302.

The company terminal 4 displays, in response to an operational input from the operating company, a list of the driver information about each driver working for the operating company (a step S304). For example, the company terminal 4, as illustrated in FIG. 15, displays a list of each driver's profile etc. including the driver's service schedule of the bus 3 and the driver attribute information. The company terminal 4 returns to the screen of the list of the operation plans following an operational input from the operating company and receives setting inputs for the driver and the vehicle to be allocated to each of the operation plans (a step S305). Since deciding the driver may determine the vehicle used by the driver, it is optional to receive an input for the vehicle information. On the other hand, deciding the vehicle may determine the driver who drives the vehicle, and thus it is optional to receive an input for the driver information.

The company terminal 4 decides whether or not to approve the operation plan based on an operational input from the operating company (a step S306). When it is decided that the operation plan is to be approved (S306: YES), the company terminal 4 notifies the server 1 that the operation plan is to be approved (a step S307). After executing the step S307, or the step S306 is NO, the company terminal 4 terminates the series of processes.

Although not shown in FIG. 17, a process after the step S307 executed by the server 1 will be described herein. When receiving the notification from the company terminal 4 that the operating company approves the operation plan, the server 1 performs a process for allocating the operating company (or the driver or the vehicle of the operating company) to the operation plan based on such notification. Even after the process of allocating the operating company to the operation plan as above, the passenger with the new request for use may be sorted out into the cluster corresponding to the operation plan, modifying the operation plan. The modification of the operation plan may require a prerequisite that the operating company approves the modified operation plan. Also, such the modification of the operation plan may be allowed only between the service starting time and a predetermined time. Still further, the operation plan may be finalized during a period of time between the service starting time and the predetermined time, and the get-on time for each of the users to be transported based on the operation plan may be notified to each of the users.

The flow chart in FIG. 17 has been described as the flowchart for showing an example of the processing procedure executed by the company terminal 4. However, the server 1 may execute the processes from the step S301 to the step S305 and send the operation plan allocated with the driver and the vehicle to the company terminal 4. The company terminal 4 then may decide whether to approve the operation plan or not (the step S306).

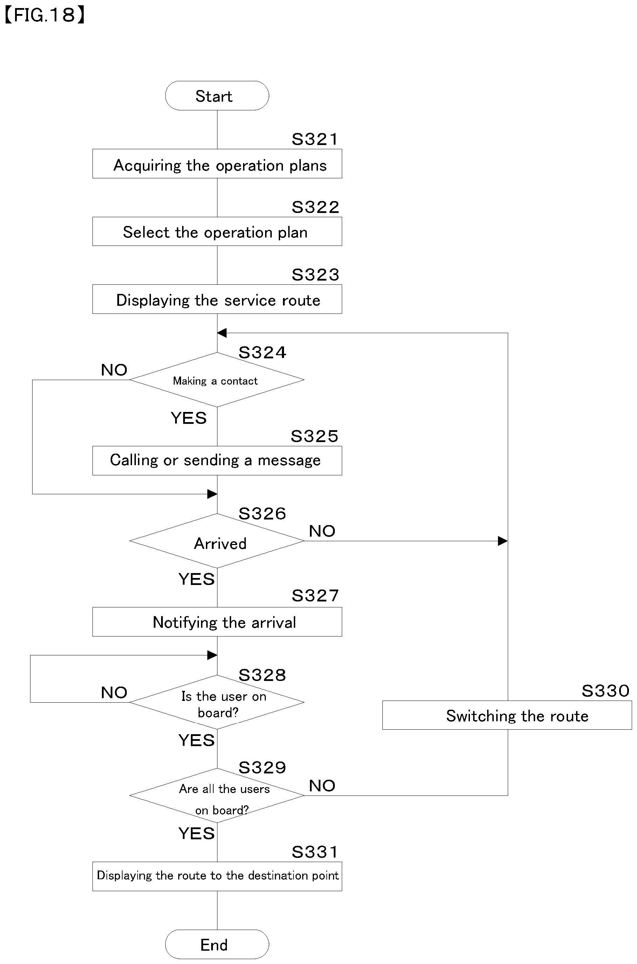

FIG. 18 is a flowchart for showing an example of a processing procedure executed by the driver's terminal 5. The processing procedure executed by the driver's terminal 5 will be described based on FIG. 18. The driver's terminal 5 acquires from the server 1 the operation plan created based on the requests for use from the users (passenger information) (a step S321). For example, the driver's terminal 5 acquires information on one or more of the operation plans of which the driver is scheduled to be on service on that day. The driver's terminal 5 displays one or more of the operation plans to receive a selectable input for displaying the service route of the operation plan (a step S322).

The driver's terminal 5 displays the service route of the selected operation plan for picking up the users (a step S323). For example, in the step S 323, the driver's terminal 5 firstly displays the route to the get-on point where the first user gets on. For example, the driver's terminal 5 displays, in addition to the route to the get-on point, the scheduled arrival time at the get-on point, the scheduled departing time from the get-on point, the distance from the current position, the remaining service time estimated from the current position, and so on. The driver's terminal 5 also displays, for example, the objects (the call icon 161 and the message icon 162, etc.) for making contact with the user who is getting on at the get-on point.

In response to an operational input on the contacting object, the driver's terminal 5 decides whether or not to communicate with the user scheduled to get on (a step S324). If it is decided to have the communication (S324: YES), the driver's terminal 5 makes a call or sends a message via the server 1 to the user terminal 2 of the user corresponding to the displayed get-on point (a step S325).

If the step S324 is NO, or after executing the process in the step S325, the driver's terminal 5 decides whether or not the bus 3 has arrived at the get-on point based on an operational input on the arrival button 163 (a step S326). If it is decided that the bus 3 has not arrived yet (S326: NO), the driver's terminal 5 returns the process back to the step S324. If it is decided that the bus 3 has arrived (S326: YES), the driver's terminal 5 notifies an arrival of the bus 3 via the server 1 to the user terminal 2 of the user corresponding to the arrived get-on point (a step S327).

The driver's terminal 5 decides whether the user is on board or not based on an operational input from the driver (a step S328). If it is decided that the user is not on board (S328: NO), the driver's terminal 5 holds the process. If it is decided that the user is on board (S328: YES), the driver's terminal 5 decides whether all the users are on board or not (a step S329). If it is decided that all the users are not on board (S329: NO), the driver's terminal 5 switches the display to a route to the next user's get-on point (a step S330) and returns the process to the step S324. If it is decided that all the users are on board (S329: YES), the driver's terminal 5 displays a route to the destination point (a step S331) and terminates the series of the processes.

Upon arrival at the destination point, the driver's terminal 5 may notify to the server 1 that the bus 3 has reached the destination point. The server 1, upon the arrival at the destination point, may notify the user about the arrival at the destination point and, at the same time, may execute a process for payment of the user's ride fare.

As above, the third embodiment of the present invention can support a smooth execution of the operation plan created automatically by the server 1.

All the embodiments disclosed above are examples in every way and shall be considered as not limiting. The scope of the present invention is not limited by what has been described above, and rather defined by the claims below. It is intended that all the modifications within the meaning and the scope equivalent to the scope of the claims belong to the technical scope of the present invention.

### (DESCRIPTION OF NOTATIONS)

- 1: server (information processing device)
- 11: control unit
- 12: main storage unit
- 13: communication unit
- 14: auxiliary storage unit
- P1: program
- 141: user DB
- 142: bus DB
- 143: driver DB
- 144: operation plan DB
- 2: user terminal
- 21: control unit
- 22: main storage unit
- 23: communication unit
- 24: display unit
- 25: input unit
- 26: position information acquisition unit
- 27: auxiliary storage unit
- P2: program
- 3: bus (vehicle)
- 4: company terminal
- 5: driver's terminal

## Claims

1. An information processing device comprising:
a first acquisition unit for acquiring first passenger information, the first passenger information including a get-on point or a get-off point and a get-on time or a get-off time of a passenger who already has a reservation of use of a vehicle on which a plurality of passengers share a ride;
a second acquisition unit for acquiring second passenger information, the second passenger information including a get-on point or a get-off point and a get-on time or a get-off time of a new passenger who wishes to use the vehicle; and
a creation unit for creating an operation plan based on the first and the second passenger information to provide a service route on which the passengers get on or get off.

2. The information processing device according to claim 1, further comprising:
a sorting unit for sorting the passengers into a plurality of groups based on the first passenger information and the second passenger information, wherein
the creation unit creates the operation plan for each of the groups.

3. The information processing device according to claim 2, wherein
the sorting unit sorts the already reserved passengers into the plurality of the groups based on the first passenger information;
upon acquiring the second passenger information, the sorting unit decides whether or not to sort the new passenger into the group of the already reserved passengers based on the second passenger information; and
if it is decided that the new passenger is to be sorted into the group, the creation unit updates the operation plan so that the new passenger can get on or get off the vehicle that is associated with the group.

4. The information processing device according to claim 2 or 3, further comprising:
a third acquisition unit for acquiring passenger attribute information that provides attribute of the passenger, wherein
the creation unit sorts the passengers into the plurality of groups based on the passenger attribute information.

5. The information processing device according to any one of claims 2 to 4, further comprising:
a fourth acquisition unit for acquiring driver attribute information that provides attribute of a driver of the vehicle, wherein
the creation unit sorts the passengers into the plurality of groups based on the driver attribute information.

6. The information processing device according to any one of claims 2 to 5, further comprising:
a fifth acquisition unit for acquiring vehicle attribute information that provides attribute of the vehicle, wherein
the creation unit sorts the passengers into the plurality of groups based on the vehicle attribute information.

7. The information processing device according to any one of claims 1 to 6, wherein
the vehicle is a shuttle vehicle running back and forth between a predetermined departure point and a destination point; and
the creation unit creates the operation plan showing a forward path or a return path of the vehicle based on the first and the second passenger information.

8. The information processing device according to any one of claims 1 to 7, wherein
the creation unit creates the operation plan referring to the number of the vehicles with no passengers on board among the plurality of vehicles.

9. The information processing device according to any one of claims 1 to 8, further comprising:
a first notification unit, wherein
the creation unit creates the operation plan in which the passenger is to get on at a get-on point that is different from a get-on point requested by the passenger; and
the first notification unit notifies the passenger of the get-on point that is decided by the operation plan.

10. The information processing device according to any one of claims 1 to 9, wherein
the first acquisition unit and the second acquisition unit acquire the first passenger information and the second passenger information, respectively, each of the first and second passenger information further including a tolerable time between the get-on time or get-off time requested by the passenger and a pick-up time or a drop-off time at which the vehicle picks up or drops off the passenger; and
the creation unit creates the operation plan in which the get-on time or the get-off time is decided within a range of the tolerable time.

11. The information processing device according to any one of claims 1 to 10, further comprising:
a second setting unit, wherein
the second passenger information includes demand information associated with demand of the new passenger, or supply information associated with supply of the vehicle;
the creation unit creates the operation plan based on the demand information or the supply information; and
the second setting unit decides a ride fare of the passenger based on the demand information or the supply information.

12. The information processing device according to any one of claims 1 to 11, further comprising:
a decision unit for deciding a vacancy state of the vehicle referring to the operation plan; and
an output unit for outputting the vacancy state, wherein
the second acquisition unit acquires the second passenger information from an output destination of the vacancy state.

13. The information processing device according to any one of claims 1 to 12, further comprising:
a second decision unit that decides the driver or the vehicle to be allocated to the operation plan based on at least one of content of the operation plan, the driver's schedule, the vehicle's schedule, the first passenger information, the second passenger information, driver information associated with the driver, and vehicle information associated with the vehicle.

14. An information processing method that causes a computer to execute processing, the method comprising:
acquiring first passenger information, the first passenger information including a get-on point or a get-off point and a get-on time or a get-off time of a passenger who already has a reservation of use of a vehicle on which a plurality of passengers share a ride;
acquiring second passenger information, the second passenger information including a get-on point or a get-off point and a get-on time or a get-off time of a new passenger who wishes to use the vehicle; and
creating an operation plan based on the first and the second passenger information to provide a service route on which the passengers get on or get off.

15. A program that causes a computer to execute processes for:
receiving an input of passenger information from a user, the passenger information including a get-on point or a get-off point and a get-on time or a get-off time at which the user gets on or gets off a vehicle on which a plurality of passengers share a ride;
outputting the passenger information to a managing device that manages operation of the vehicle;
acquiring from the managing device a service guide for the vehicle to pick up the user in accordance with an operation plan created based on the passenger information of each of the plurality of passengers including the user; and
displaying the acquired service guide on a display unit.

16. The program according to claim 15, further causing the computer to execute a process for:
displaying on the display unit the service guide including a current position of the user, the get-on point at which the user is to get on the vehicle, and an expected arrival time estimated based on a current position of the vehicle.

17. The program according to claim 15 or 16, further causing the computer to execute processes for:
acquiring the service guide from the managing device and displaying the service guide on the displaying unit, wherein
the service guide follows the operation plan created based on demand information, which is associated with demand of the passengers, or supply information, which is associated with supply of the vehicle, and the service guide incudes a ride fare of the user, the ride fare being decided based on the demand information or the supply information.

18. The program according to any one of claims 15 to 17, further causing the computer to execute a process for:
acquiring from the managing device the service guide that follows the operation plan that is created based on passenger attribute information of the passenger, driver attribute information of a driver of the vehicle, or vehicle attribute information of the vehicle.

19. The program according to any one of claims 15 to 18, further causing the computer to execute processes for:
acquiring from the managing device a notification showing a vacancy state of the vehicle and displaying the vacancy state on the display unit;
receiving an input of the passenger information of the passenger who wishes to ride the vehicle and outputting the passenger information on the managing device; and
acquiring from the managing device the service guide for the passenger to get on the vehicle and displaying the service guide on the display unit.

20. A program that causes a computer to execute processes for:
acquiring a plurality of operation plans each of which is created based on passenger information to provide a service route on which a passenger gets on or gets off, the passenger information including a get-on point or a get-off point and a get-on time or a get-off time at which the passenger gets on or gets off a vehicle on which a plurality of passengers share a ride; and
displaying a list of the acquired plurality of operation plans on a display unit.

21. The program according to claim 20, further causing the computer to execute processes for:
deciding a driver or the vehicle that can be allocated to the operation plan based on at least one of content of the operation plan, the driver's schedule, the vehicle's schedule, the passenger information, driver information associated with the driver, and vehicle information associated with the vehicle; and
displaying a list of the operation plans each of which is allocated with the driver and the vehicle.

22. The program according to claim 20 or 21, further causing the computer to execute a process for:
receiving a selectable input for selecting from the list of the operation plans the operation plan that is approved as an order by an operating company that operates the vehicle.

23. A program that causes a computer to execute processes for:
acquiring an operation plan created based on passenger information, the passenger information including a get-on point or a get-off point and a get-on time or a get-off time at which a passenger gets on or gets off a vehicle on which a plurality of passengers share a ride, the operation plan providing a service route on which the passenger gets on or gets off;
displaying the service route based on the operation plan on a displaying unit;
deciding whether or not the vehicle has arrived at the get-on point at which the passenger gets on; and
if it is decided that the vehicle has arrived at the get-on point, notifying of an arrival of the vehicle to the passenger corresponding to the get-on point.

24. The program according to claim 23, further causing the computer to execute processes for:
deciding whether or not the passenger notified of the arrival of the vehicle is on board the vehicle;
if it is decided that the passenger is on board, switching the display to show a route to the get-on point at which the next passenger is to get on; and
notifying the next passenger that the passenger has got on at the previous get-on point.
